(19) Europäisches Patentamt
European Patent Office
Office européen des brevets

(11) EP 2 735 588 A1

(12) **EUROPEAN PATENT APPLICATION**
published in accordance with Art. 153(4) EPC

(43) Date of publication:
**28.05.2014 Bulletin 2014/22**

(21) Application number: **12815604.9**

(22) Date of filing: **03.07.2012**

(51) Int Cl.:
***C08L 51/06*** (2006.01) ***B32B 27/30*** (2006.01)
***C08F 2/44*** (2006.01) ***C08F 265/06*** (2006.01)
***C08J 5/00*** (2006.01) ***G02B 5/30*** (2006.01)
***H01L 51/50*** (2006.01) ***H05B 33/02*** (2006.01)

(86) International application number:
**PCT/JP2012/066937**

(87) International publication number:
**WO 2013/011828 (24.01.2013 Gazette 2013/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2011 JP 2011159095**

(71) Applicant: **Nippon Shokubai Co., Ltd.**
**Osaka-shi, Osaka 541-0043 (JP)**

(72) Inventors:
- **KIKUTA Teruo**
**Suita-shi**
**Osaka 564-8512 (JP)**
- **NAKAO Kanji**
**Suita-shi**
**Osaka 564-8512 (JP)**
- **NAMIMOTO Fuyuko**
**Suita-shi**
**Osaka 564-8512 (JP)**
- **AKUTAGAWA Hironobu**
**Suita-shi**
**Osaka 564-8512 (JP)**

(74) Representative: **Schön, Christoph**
**Dr. Schön, Neymeyr & Partner mbB**
**Bavariaring 26**
**80336 München (DE)**

(54) **MOLDING MATERIAL**

(57) Provision of a molding material excellent in molding accuracy without using a silicone resin and suitable for use in producing a molded body having high hardness and excellent appearance; a resin film formed from the molding material; a molded body obtained by using the molding material as a starting material; and a method for producing the molded body. A molding material used as a starting material in producing a molded body, containing a (meth)acrylic resin emulsion, a polyfunctional (meth)acrylic acid ester and a polymerization initiator; a resin film formed from the molding material; a molded body including a substrate and a molding material layer formed on the substrate wherein the molding material layer is formed from the molding material; and a method for producing the molded body.

[FIG.1]

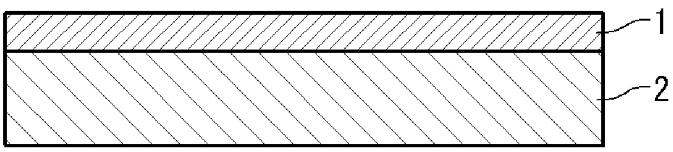


EP 2 735 588 A1

**Description**

TECHNICAL FIELD

The present invention relates to a molding material. More specifically, the present invention relates to a molding material which is excellent in followability in a molding die, and which can be suitably used as a molding material for a resin molded body having a complicated shape and the like, a resin film which is formed from the molding material, as well as a molded body which is obtained by using the molding material as a starting material, and a method for producing the molded body. The molded body is expected to be used in, for example, a polarizer-protective film, an organic electroluminescence light emitting device and the like.

BACKGROUND ART

As a molding material, a variety of molding materials have been developed in recent years. As a molding material excellent in mold transferability and molding property, a liquid silicone thermosetting resin composition has been proposed (see, for example, Examples 1 to 3 of Patent Literature 1). Since the molding material contains a silicone resin as a main component, the molding material is excellent in mold transferability and molding property. However, a molded body which is produced by using the molding material has a defect such that the molded body has low hardness due to the use of the silicone resin.

Therefore, in recent years, there has been desired development of a molding material which is excellent in molding accuracy, and suitable for use in producing a molded body having a high hardness and excellent appearance.

In optical parts used in displays such as a liquid crystal display and an organic electroluminescence (EL) display, and optical members such as a lens, visibility tends to be lowered by the reflection of a light ray such as sunlight or illumination at the interface contacting with the air. Therefore, in order to suppress the reflection of a light ray on the surface of an optical member, it has been conceivable to subject the optical member to an anti-glare [AG] treatment, an anti-reflection [AR] treatment or the like.

Herein, the anti-glare treatment means a treatment which includes applying fine particles or the like to an optical member to impart a concave/convex structure to the surface of the optical member to scatter a light ray in order to scatter a reflected image and blur its contour. Also, the anti-reflection treatment means a treatment for forming on the surface of a substrate a film having a refractive index which is different from the substrate in a thickness of around the wavelength of a light ray, thereby causing interference of a light ray, and decreasing the reflectance.

Also, in order to prevent the reflection of a light ray, it has been also proposed to impart a moth eye (eye of moth) structure to a substrate (see, for example, Non-Patent Literature 1). When the moth eye structure is imparted to the substrate, a mountain shape projection smaller than the wavelength of a visible ray is formed on the surface of the substrate. Therefore, the refractive index in the boundary region between the substrate and the air becomes an intermediate value between the refractive index of a material which forms the projection and the refractive index of the air. In the boundary region between the substrate and the air, the occupancy ratio between the projection of the substrate and the air varies in the height direction of the projection. Therefore, the refractive index in the boundary region between the substrate and the air is continuously changed in a distance shorter than the wavelength of a visible ray. As a result, the boundary region between the substrate and the air does not act as a distinct interface in refractive index. Therefore, the reflection of the visible ray at the interface can be suppressed.

As a method for imparting a moth eye structure to a substrate, there has been known a method for transferring a concave/convex structure having a nanometer size engraved in a molding die to a substrate, which is a so-called nanoimprint method. As a nanoimprint method, there have been known:

(1) a method which includes softening a substrate having thermal plasticity by heating, pushing a molding die against the softened substrate to shape the substrate, thereafter, cooling the substrate, and releasing the molding die from the substrate,

(2) a method which includes applying a material having curability to a substrate, and curing the material by irradiating the material with an active energy ray or heating the material in the state where a molding die is pushed against the material (see, for example, Patent Literature 2), and the like.

Among the above-mentioned methods, according to the above-mentioned method (2), inter alia, according to a method which includes applying a material having curability to a substrate, and irradiating the material with an active energy ray in the state where a molding die is pushed against the material to cure the material, a thin film having a moth eye structure of a shape corresponding to the shape of the molding die can be formed on the substrate by, for example, forming a thin film of an ultraviolet curable resin on a substrate, pushing a molding die against the thin film, and then irradiating the thin film with an ultraviolet ray to cure the ultraviolet curable resin. Accordingly, this method has an

advantage such that the molding period of time can be shortened as compared with the above-mentioned method (1). However, according to the above-mentioned method, since the ultraviolet curable resin is shrunk in curing, there arises a defect such that a molded body having a shape which is smaller than the inner surface shape of a molding die is formed, or warpage is generated on its substrate, and therefore the molding accuracy is lowered.

PRIOR ART DOCUMENTS

PATENT DOCUMENTS

Patent Literature 1: Japanese Unexamined Patent Publication No. 2011-93994
Patent Literature 2: Japanese Unexamined Patent Publication No. 2008-209540

NON-PATENT DOCUMENTS

Non-Patent Literature 1: "OPTICAACTA", 1982, vol. 29, No. 7, p. 993-1009

SUMMARY OF THE INVENTION

PROBLEMS TO BE SOLVED BY THE INVENTION

The present invention has been accomplished in view of the foregoing prior art. An object of the present invention is to provide a molding material which is excellent in molding accuracy without using a silicone resin and suitable for use in the production of a molded body which has high hardness and excellent appearance; a resin film which is formed from the molding material; a molded body which is obtained by using the molding material as a starting material; and a method for producing the molded body.

MEANS FOR SOLVING THE PROBLEMS

The present invention relates to:

(1) a molding material which is used as a starting material in producing a molded body, containing a (meth)acrylic resin emulsion, a polyfunctional (meth)acrylic acid ester and a polymerization initiator,
(2) a resin film formed from the molding material according to the above item (1),
(3) a molded body formed from the molding material according to the above item (1), wherein the molding material is cured,
(4) a molded body including a substrate and a molding material layer formed on the substrate, wherein the molding material layer is formed from the molding material according to the above item (1),
(5) the molded body according to the above item (4), wherein the molding material layer is cured,
(6) the molded body according to above item (4) or (5), wherein the substrate is a film-shaped substrate,
(7) a method for producing a molded body, including forming a resin film from a molding material containing a (meth)acrylic resin emulsion, a polyfunctional (meth)acrylic acid ester and a polymerization initiator, and molding the formed resin film with a molding die,
(8) a molded body including a film-shaped substrate and a molding material layer having a concave/convex structure formed on at least one surface of the film-shaped substrate, wherein the dynamic hardness in a pushing depth of 100 nm from the surface having the concave/convex structure is 5 to 50 $mN/\mu m^2$,
(9) the molded body according to the above item (8), wherein the molding material layer having the concave/convex structure is formed from the molding material according to (1),
(10) the molded body according to the above item (8) or (9), wherein the average pitch in a horizontal direction of the concave/convex structure in the molding material layer having the concave/convex structure is not more than the wavelength of a visible ray,
(11) the molded body according to any one of the above items (8) to (10), wherein the film-shaped substrate contains a polymer having a ring structure in its main chain,
(12) the molded body according to any one of the above items (8) to (11), wherein the use of the molded body is a polarizer-protective film,
(13) the molded body according to any one of the above items (8) to (11), wherein the use of the molded body is an organic electroluminescence light emitting device, and

(14) a method for producing the molded body according to any one of the above items (8) to (11), including forming a molding material layer made of a molding material, forming a concave/convex structure on the formed molding material layer, and curing the molding material layer on which the concave/convex structure is formed.

Incidentally, in the present description, "(meth)acrylate" means "acrylate" and/or "methacrylate", and "(meth)acrylic" means "acrylic" and/or "methacrylic".

## EFFECTS OF THE INVENTION

The molding material of the present invention is excellent in molding accuracy without using a silicone resin, and suitable for use in the production of a molded body which has high hardness and excellent appearance. According to the method for producing a molded body of the present invention, there can be obtained a molded body which is excellent in molding accuracy, and has high hardness and excellent appearance. Since the resin film of the present invention is formed from the above-mentioned molding material, the resin film is excellent in molding accuracy, and has high hardness and excellent appearance.

## BRIEF EXPLANATION OF THE DRAWINGS

[FIG. 1] A schematic cross-sectional view showing one embodiment of a molded body obtained by using the molding material of the present invention.
[FIG. 2] A is a schematic explanation view showing one embodiment of a method for producing a molded body obtained by using the molding material of the present invention.
[FIG. 3] A schematic explanation view showing another embodiment of a method for producing a molded body obtained by using the molding material of the present invention.
[FIG. 4] A schematic explanation view showing another embodiment of a method for producing a molded body obtained by using the molding material of the present invention.
[FIG. 5] A schematic cross-sectional view showing another embodiment of a molded body obtained by using the molding material of the present invention.
[FIG. 6] A schematic cross-sectional view showing one embodiment of a polarizer-protective film obtained by using the molding material of the present invention.
[FIG. 7] A schematic cross-sectional view showing one embodiment of an organic electroluminescence (organic EL) light emitting device obtained by using the molding material of the present invention.

## MODES FOR CARRYING OUT THE INVENTION

The molding material of the present invention is characterized in that the molding material contains a (meth)acrylic resin emulsion, a polyfunctional (meth)acrylic acid ester and a polymerization initiator, as described above.

The (meth)acrylic resin emulsion can be easily prepared by emulsion-polymerizing a monomer component containing a (meth)acrylic monomer component as an essential component. More specifically, the (meth)acrylic resin emulsion can be easily prepared, for example, by a method which includes polymerizing a monomer component in a micelle which is formed with an emulsifier in water with a polymerization initiator, and the present invention is not limited only to its method.

The (meth)acrylic resin emulsion can be a resin emulsion containing emulsion particles obtained by carrying out the reaction of a functional group of emulsion particles contained in a (meth)acrylic resin emulsion with a compound which has a reactivity with the functional group. Examples of the resin emulsion include, for example, a resin emulsion containing emulsion particles obtained by reacting emulsion particles having a carboxyl group with a compound having a functional group such as an epoxy group, an oxazoline group or an aziridinyl group; a resin emulsion containing emulsion particles obtained by reacting emulsion particles having an epoxy group with a compound having a functional group such as a carboxyl group or an amino group; a resin emulsion containing emulsion particles obtained by reacting emulsion particles having a carbonyl group with a compound having a hydrazide group; a resin emulsion containing emulsion particles obtained by reacting emulsion particles having a hydroxyl group with a compound having a functional group such as an isocyanato group, and the like, and the present invention is not limited only to those exemplified ones.

In the above-mentioned resin emulsion containing emulsion particles obtained by reacting emulsion particles having a carboxyl group with a compound having an epoxy group, examples of the compound having an epoxy group which has a reactivity with a carboxyl group include, for example, glycidyl (meth)acrylate, allyl glycidyl ether, a polymer having an epoxy group and the like, and the present invention is not limited only to those exemplified ones. These

compounds can be used alone, respectively, or at least two kinds thereof can be used together.

In the above-mentioned resin emulsion containing emulsion particles obtained by reacting emulsion particles having a carboxyl group with a compound having an oxazoline group, examples of the compound having an oxazoline group which has a reactivity with a carboxyl group include, for example, isopropenyloxazoline, a polymer having an oxazoline group and the like, and the present invention is not limited only to those exemplified ones. These compounds can be used alone, respectively, or at least two kinds thereof can be used together.

In the above-mentioned resin emulsion containing emulsion particles obtained by reacting emulsion particles having an epoxy group with a compound having a carboxyl group, examples of the compound having a carboxyl group which has a reactivity with an epoxy group include, for example, (meth)acrylic acid, itaconic acid, a polymer having a carboxyl group and the like, and the present invention is not limited only to those exemplified ones. These compounds can be used alone, respectively, or at least two kinds thereof can be used together.

In the above-mentioned resin emulsion containing emulsion particles obtained by reacting emulsion particles having an epoxy group with a compound having an amino group, examples of the compound having an amino group which has a reactivity with an epoxy group include, for example, dimethylaminoethyl (meth)acrylate, a polymer having an amino group and the like, and the present invention is not limited only to those exemplified ones. These compounds can be used alone, respectively, or at least two kinds thereof can be used together.

In the above-mentioned resin emulsion containing emulsion particles obtained by reacting emulsion particles having a carbonyl group with a compound having a hydrazide group, examples of the compound having a hydrazide group which has a reactivity with a carbonyl group include, for example, adipic acid dihydrazide, a polymer having a dihydrazide group and the like, and the present invention is not limited only to those exemplified ones. These compounds can be used alone, respectively, or at least two kinds thereof can be used together.

In another aspect of a (meth)acrylic resin emulsion, during the preparation of the (meth)acrylic resin emulsion, or after the preparation of the (meth)acrylic resin emulsion, a compound which has a reactivity with a functional group of emulsion particles can be added to react the (meth)acrylic resin emulsion with the compound.

Examples of the monomer component include, for example, radical polymerizable monomers such as an aromatic monomer and an ethylenically unsaturated monomer, and these monomers can be used alone, respectively, or at least two kinds thereof can be used together.

Examples of the aromatic monomer include, for example, styrene and derivatives thereof, an aralkyl (meth)acrylate and the like, and the present invention is not limited only to those exemplified ones. These aromatic monomers can be used alone, respectively, or at least two kinds thereof can be used together.

Examples of styrene and derivatives thereof include, for example, styrene, α-methylstyrene, o-methylstyrene, m-methylstyrene, p-methylstyrene, o-ethylstyrene, m-ethylstyrene, p-ethylstyrene, o-methoxystyrene, m-methoxystyrene, p-methoxystyrene, o-ethoxystyrene, m-ethoxystyrene, p-ethoxystyrene, o-fluorostyrene, m-fluorostyrene, p-fluorostyrene, o-chlorostyrene, m-chlorostyrene, p-chlorostyrene, o-bromostyrene, m-bromostyrene, p-bromostyrere, o-acetoxystyrene, m-acetoxystyrene, p-acetoxystyrene, o-tert-butoxystyrene, m-tert-butoxystyrene, p-tert-butoxystyrene, o-tert-butylstyrene, m-tert-butylstyrene, p-tert-butylstyrene, vinyltoluene and the like, and the present invention is not limited only to those exemplified ones. These monomers can be used alone, respectively, or at least two kinds thereof can be used together. In styrene and derivatives thereof, a functional group such as an alkyl group such as methyl group or tert-butyl group, nitro group, nitrile group, an alkoxyl group, an acyl group, a sulfone group, hydroxyl group or a halogen atom can be existed on its benzene ring. In styrene and derivative thereof, styrene is preferable from the viewpoint of enhancement of water resistance of a molded body.

Examples of the aralkyl (meth)acrylate include, for example, aralkyl (meth)acrylates having an aralkyl group having 7 to 18 carbon atoms, such as benzyl (meth)acrylate, phenylethyl (meth)acrylate, methylbenzyl (meth)acrylate and naphthylmethyl (meth)acrylate, and the like, and the present invention is not limited only to those exemplified ones. These monomers can be used alone, respectively, or at least two kinds thereof can be used together.

Examples of the ethylenically unsaturated monomer include, for example, an alkyl (meth)acrylate, a hydroxyl group-containing (meth)acrylate, a carboxyl group-containing monomer, an oxo group-containing monomer, a fluorine atom-containing monomer, a nitrogen atom-containing monomer, an epoxy group-containing monomer, an alkoxyalkyl (meth)acrylate, a silane group-containing monomer, a carbonyl group-containing monomer, an aziridinyl group-containing monomer and the like, and the present invention is not limited only to those exemplified ones. These ethylenically unsaturated monomers can be used alone, respectively, or at least two kinds thereof can be used together.

Examples of the alkyl (meth)acrylate include, for example, alkyl (meth)acrylates in which an ester group has 1 to 18 carbon atoms, such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, sec-butyl (meth)acrylate, 2-ethylhexyl (meth)acrylate, n-octyl (meth)acrylate, tridecyl (meth)acrylate, n-lauryl (meth)acrylate, dodecyl (meth)acrylate, stearyl (meth)acrylate, 2-(acetoacetoxy)ethyl (meth)acrylate, 2-ethylhexylcarbitol (meth)acrylate, isobornyl (meth)acrylate, cyclohexyl (meth)acrylate, 4-methylcyclohexylmethyl (meth)acrylate, tert-butylcyclohexyl (meth)acrylate and cyclododecyl (meth)acrylate, and the like, and the present invention is not limited only to those exemplified ones. These monomers

can be used alone, respectively, or at least two kinds thereof can be used together.

Examples of the hydroxyl group-containing (meth)acrylate include, for example, hydroxyl group-containing (meth)acrylates in which an ester group has 1 to 18 carbon atoms, such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate and caprolactone-modified hydroxy (meth)acrylate, and the like, and the present invention is not limited only to those exemplified ones. These monomers can be used alone, respectively, or at least two kinds thereof can be used together.

Examples of the carboxyl group-containing monomer include, for example, carboxyl group-containing aliphatic monomers such as (meth)acrylic acid, maleic acid, fumaric acid, crotonic acid, itaconic acid, citraconic acid, maleic anhydride, maleic acid monomethyl ester, maleic acid monobutyl ester, itaconic acid monomethyl ester, itaconic acid monobutyl ester, vinylbenzoic acid, oxalic acid monohydroxyethyl (meth)acrylate and carboxyl group-terminated caprolactone-modified (meth)acrylate, and the like, and the present invention is not limited only to those exemplified ones. These monomers can be used alone, respectively, or at least two kinds thereof can be used together. In these carboxyl group-containing monomers, from the viewpoint of improvement in dispersion stability of emulsion particles, acrylic acid, methacrylic acid and itaconic acid are preferable, and acrylic acid and methacrylic acid are more preferable.

Examples of the oxo group-containing monomer include, for example, (di)ethylene glycol (methoxy)(meth)acrylates such as ethylene glycol (meth)acrylate, ethylene glycol methoxy(meth)acrylate, diethylene glycol (meth)acrylate and diethylene glycol methoxy(meth)acrylate, and the like, and the present invention is not limited only to those exemplified ones. These monomers can be used alone, respectively, or at least two kinds thereof can be used together.

Examples of the fluorine atom-containing monomer include, for example, fluorine atom-containing alkyl (meth)acrylates having a fluorine atom in an ester group, such as trifluoroethyl (meth)acrylate, tetrafluoropropyl (meth)acrylate, octafluoropentyl (meth)acrylate, perfluorobutylethyl (meth)acrylate, perfluoroisononylethyl (meth)acrylate and perfluorooctylethyl (meth)acrylate, and the like, and the present invention is not limited only to those exemplified ones. These monomers can be used alone, respectively, or at least two kinds thereof can be used together.

Examples of the nitrogen atom-containing monomer include, for example, acrylamide compounds such as (meth)acrylamide, N-monomethyl(meth)acrylamide, N-monoethyl(meth)acrylamide, N,N-dimethyl(meth)acrylamide, N-n-propyl(meth)acrylamide, N-isopropyl(meth)acrylamide, methylenebis(meth)acrylamide, N-methylol(meth)acrylamide, N-butoxymethyl(meth)acrylamide, dimethylaminoethyl(meth)acrylamide, N,N-dimethylaminopropylacrylamide and diacetoneacrylamide, nitrogen atom-containing (meth)acrylate compounds such as dimethylaminoethyl (meth)acrylate, diethylaminoethyl (meth)acrylate and ethylene oxide-added (meth)acrylate of morpholine, N-vinylpyrrolidone, N-vinylpyridine, N-vinylimidazole, N-vinylpyrrole, N-vinyloxazolidone, N-vinylsuccinimide, N-vinylmethyl carbamate, N,N-methylvinylacetamide, (meth)acryloyloxyethyltrimethylammonium chloride, 2-isopropenyl-2-oxazoline, 2-vinyl-2-oxazoline, (meth)acrylonitrile and the like, and the present invention is not limited only to those exemplified ones. These monomers can be used alone, respectively, or at least two kinds thereof can be used together.

Examples of the epoxy group-containing monomer include, for example, epoxy group-containing (meth)acrylates such as glycidyl (meth)acrylate, $\alpha$-methylglycidyl (meth)acrylate, glycidyl allyl ether, oxocyclohexylmethyl (meth)acrylate and 3,4-epoxycyclohexylmethyl (meth)acrylate, and the like, and the present invention is not limited only to those exemplified ones. These monomers can be used alone, respectively, or at least two kinds thereof can be used together.

Examples of the alkoxyalkyl (meth)acrylate include, for example, methoxyethyl (meth)acrylate, methoxybutyl (meth)acrylate, ethoxybutyl (meth)acrylate, trimethylolpropanetripropoxy (meth)acrylate and the like, and the present invention is not limited only to those exemplified ones. These monomers can be used alone, respectively, or at least two kinds thereof can be used together.

Examples of the silane group-containing monomer include, for example, vinyltrimethoxysilane, vinyltriethoxysilane, vinyltri(methoxyethoxy)silane, $\gamma$-(meth)acryloyloxypropyltrimethoxysilane, 2-styrylethyltrimethoxysilane, vinyltrichlorosilane, $\gamma$-(meth)acryloyloxypropylhydroxysilane, $\gamma$-(meth)acryloyloxypropylmethylhydroxysilane and the like, and the present invention is not limited only to those exemplified ones. These monomers can be used alone, respectively, or at least two kinds thereof can be used together.

Examples of the carbonyl group-containing monomer include, for example, acrolein, formylstyrol, vinyl ethyl ketone, (meth)acryloxyalkylpropenal, acetonyl (meth)acrylate, diacetone (meth)acrylate, 2-hydroxypropyl (meth)acrylate acetyl acetate, butanediol-1,4-acrylate acetyl acetate and the like, and the present invention is not limited only to those exemplified ones. These monomers can be used alone, respectively, or at least two kinds thereof can be used together.

Examples of the aziridinyl group-containing monomer include, for example, (meth)acryloylaziridine, 2-aziridinylethyl (meth)acrylate and the like, and the present invention is not limited only to those exemplified ones. These monomers can be used alone, respectively, or at least two kinds thereof can be used together.

Among the ethylenically unsaturated monomers, (meth)acrylic monomers such as an alkyl (meth)acrylate, a hydroxyl group-containing (meth)acrylate, an alkoxyalkyl (meth)acrylate and (meth)acrylic acid are preferable, and methyl (meth)acrylate, tert-butyl (meth)acrylate, 2-ethylhexyl (meth)acrylate, cyclohexyl (meth)acrylate and (meth)acrylic acid are more preferable from the viewpoint of improvement in moldability and water resistance of a molding material.

Furthermore, in the present invention, from the viewpoint of imparting ultraviolet stability and ultraviolet absorptivity to emulsion particles, an ultraviolet-stable monomer, an ultraviolet-absorbing monomer and the like can be contained in a monomer component as long as an object of the present invention is not hindered.

Examples of the ultraviolet-stable monomer include, for example, 4-(meth)acryloyloxy-2,2,6,6-tetramethylpiperidine, 4-(meth)acryloylamino-2,2,6,6-tetramethylpiperidine, 4-(meth)acryloyloxy-1,2,2,6,6-pentamethylpiperidine, 4-(meth)acryloyl-1-methoxy-2,2,6,6-tetramethylpiperidine, 4-cyano-4-(meth)acryloyloxy-2,2,6,6-tetramethylpiperidine, 1-(meth)acryloyl-4-(meth)acryloylamino-2,2,6,6-tetramethylpiperidine, 4-crotonoylamino-2,2,6,6-tetramethylpiperidine, 4-(meth)acryloylamino-1,2,2,6,6-pentamethylpiperidine, 4-cyano-4-(meth)acryloylamino-2,2,6,6-tetramethylpiperidine, 4-crotonoyloxy-2,2,6,6-tetramethylpiperidine, 1-(meth)acryloyl-4-cyano-4-(meth)acryloylamino-2,2,6,6-tetramethylpiperidine, 1-crotonoyl-4-crotonoyloxy-2,2,6,6-tetramethylpiperidine and the like, and the present invention is not limited only to those exemplified ones. These monomers can be used alone, respectively, or at least two kinds thereof can be used together.

Examples of the ultraviolet-absorbing monomer include, for example, a benzotriazole ultraviolet-absorbing monomer, a benzophenone ultraviolet-absorbing monomer and the like, and the present invention is not limited only to those exemplified ones. These monomers can be used alone, respectively, or at least two kinds thereof can be used together.

Examples of the benzotriazole ultraviolet-absorbing monomer include, for example, 2-[2'-hydroxy-5'-(meth)acryloyloxymethyl-phenyl]-2H-benzotriazole, 2-[2'-hydroxy-5'-(meth)acryloyloxyethyl-phenyl]-2H-benzotriazole, 2-[2'-hydroxy-5'-(meth)acryloyloxymethyl-phenyl]-5-tert-butyl-2H-benzotriazole, 2-[2'-hydroxy-5'-(meth)acryloylaminomethyl-5'-tert-octylphenyl]-2H-benzotriazole, 2-[2'-hydroxy-5'-(meth)acryloyloxypropylphenyl]-2H-benzotriazole, 2-[2'-hydroxy-5'-(meth)acryloyloxyhexylphenyl]-2H-benzotriazole, 2-[2'-hydroxy-3'-tert-butyl-5'-(meth)acryloyloxyethylphenyl]-2H-benzotriazole, 2-[2'-hydroxy-3'-tert-butyl-5'-(meth)acryloyloxyethyl-phenyl]-5-chloro-2H-benzotriazole, 2-[2'-hydroxy-5'-tert-butyl-3'-(meth)acryloyloxyethylphenyl]-2H-benzotriazole, 2-[2'-hydroxy-5'-(meth)acryloyloxyethylphenyl]-5-chloro-2H-benzotriazole, 2-[2'-hydroxy-5'-(meth)acryloyloxyethylphenyl]-5-cyano-2H-benzotriazole, 2-[2'-hydroxy-5'-(meth)acryloyloxyethylphenyl]-5-tert-butyl-2H-benzotriazole, 2-[2'-hydroxy-5'-(β-(meth)-acryloyloxyethoxy)-3'-tert-butylphenyl]-4-tert-butyl-2H-benzotriazole and the like, and the present invention is not limited only to those exemplified ones. These monomers can be used alone, respectively, or at least two kinds thereof can be used together.

Examples of the benzophenone ultraviolet-absorbing monomer include, for example, 2-hydroxy-4-(meth)acryloyloxybenzophenone, 2-hydroxy-4-[2-hydroxy-3-(meth)acryloyloxy]propoxybenzophenone, 2-hydroxy-4-[2-(meth)acryloyloxy]ethoxybenzophenone, 2-hydroxy-4-[3-(meth)acryloyloxy-2-hydroxypropoxy]benzophenone, 2-hydroxy-3-tert-butyl-4-[2-(meth)acryloyloxy]butoxybenzophenone and the like, and the present invention is not limited only to those exemplified ones. These monomers can be used alone, respectively, or at least two kinds thereof can be used together.

Examples of the method for emulsion-polymerizing a monomer component include, for example, a method which includes dissolving an emulsifier in a medium such as an aqueous medium containing a water-soluble organic solvent such as a lower alcohol such as methanol, and water, or water, and adding dropwise a monomer component and a polymerization initiator under stirring, a method which includes adding dropwise a monomer component which has been previously emulsified with an emulsifier and water to water or an aqueous medium, and the like, and the present invention is not limited only to those exemplified ones. Incidentally, the amount of the medium can be appropriately controlled in view of the amount of a non-volatile matter contained in the resulting resin emulsion. The medium can be previously charged into a reaction vessel, or can be used as a pre-emulsion. Also, the medium can be used as occasion demands during the time when the emulsion-polymerization of the monomer component is carried out to prepare a resin emulsion.

When the monomer component is emulsion-polymerized, the emulsion polymerization can be carried out after the monomer component, an emulsifier and a medium are mixed with each other, or can be carried out after the monomer component, an emulsifier and a medium are emulsified with stirring to prepare a pre-emulsion. Alternatively, the emulsion polymerization can be carried out by mixing at least one kind of a monomer component, an emulsifier and a medium with a remainder of the pre-emulsion. Each of the monomer component, the emulsifier and the medium can be added at a time, added in installments, or added continuously dropwise.

When an outer layer is formed on the emulsion particle contained in the resin emulsion obtained in the above, the outer layer can be formed on the above-mentioned emulsion particle by emulsion-polymerizing a monomer component in the above-mentioned resin emulsion in the same manner as described above. Also, when another outer layer is further formed on the emulsion particle on which the above-mentioned outer layer has been formed, another outer layer can be further formed on the emulsion particle by emulsion-polymerizing a monomer component in a resin emulsion in the same manner as described above. A resin emulsion containing emulsion particles having a multilayer structure can be prepared by a multistage emulsion polymerization method as explained in the above.

Examples of the emulsifier include an anionic emulsifier, a nonionic emulsifier, a cationic emulsifier, an amphoteric emulsifier, a polymeric emulsifier and the like, and these emulsifiers can be used alone, respectively, or at least

two kinds thereof can be used together.

Examples of the anionic emulsifier include, for example, alkyl sulfates such as ammonium dodecyl sulfate and sodium dodecyl sulfate; alkyl sulfonates such as ammonium dodecyl sulfonate, sodium dodecyl sulfonate and a sodium alkyl diphenyl ether disulfonate; alkylaryl sulfonates such as ammonium dodecylbenzenesulfonate and sodium dodecylnaphthalenesulfonate; polyoxyethylene alkyl sulfonates; polyoxyethylene alkyl sulfates; polyoxyethylene alkylaryl sulfates; dialkylsulfosuccinic acid salts; arylsulfonic acid-formalin condensates; fatty acid salts such as ammonium laurylate and sodium stearate; sulfuric acid esters having an allyl group such as bis(polyoxyethylene polycyclic phenyl ether) methacrylate sulfonates, propenylalkylsulfosuccinic acid ester salts, (meth)acrylic acid polyoxyethylene sulfonates, (meth)acrylic acid polyoxyethylene phosphonates and sulfonates of allyloxymethylalkyloxypolyoxyethylene, or salts thereof; sulfuric acid ester salts of allyloxymethylalkoxyethylpolyoxyethylene, polyoxyalkylene alkenyl ether ammonium sulfates and the like, and the present invention is not limited only to those exemplified ones.

Examples of the nonionic emulsifier include, for example, a polyoxyethylene alkyl ether, a polyoxyethylene alkyl aryl ether, a condensate of polyethylene glycol with polypropylene glycol, a sorbitan fatty acid ester, a polyoxyethylene sorbitan fatty acid ester, a fatty acid monoglyceride, a condensate of ethylene oxide with an aliphatic amine, an allyloxymethylalkoxyethylhydroxypolyoxyethylene, a polyoxyalkylene alkenyl ether and the like, and the present invention is not limited only to those exemplified ones.

Examples of the cationic emulsifier include, for example, alkyl ammonium salts such as dodecyl ammonium chloride, and the like, and the present invention is not limited only to those exemplified ones.

Examples of the amphoteric emulsifier include, for example, betaine ester-type emulsifiers and the like, and the present invention is not limited only to those exemplified ones.

Examples of the polymeric emulsifier include, for example, poly(meth)acrylic acid salts such as sodium polyacrylate; polyvinyl alcohol; polyvinylpyrrolidone; polyhydroxyalkyl (meth)acrylates such as polyhydroxyethyl acrylate; a copolymer containing at least one kind of a monomer constituting these polymers as a copolymerization component, and the like, and the present invention is not limited only to those exemplified ones.

Also, as the emulsifier, from the viewpoint of improvement in water resistance of a molded body, an emulsifier having a polymerizable group, which is a so-called reactive emulsifier, is preferable, and from the viewpoint of environmental protection, a non-nonylphenyl type emulsifier is preferable.

Examples of the reactive emulsifier include, for example, propenylalkylsulfosuccinic acid ester salts, (meth)acrylic acid polyoxyethylene sulfonates, (meth)acrylic acid polyoxyethylene phosphonates, polyoxyethylene alkyl propenyl phenyl ether sulfonates, sulfonates of allyloxymethylalkyloxypolyoxyethylene, sulfonates of allyloxymethylnonylphenoxyethylhydroxypolyoxyethylene, allyloxymethylalkoxyethylhydroxypolyoxyethylene sulfuric acid ester salts, bis(polyoxyethylene polycyclic phenyl ether) methacrylated sulfonates, allyloxymethylalkoxyethylhydroxypolyoxyethylene, polyoxyethylenealkyl propenyl phenyl ether, allyloxymethylnonylphenoxyethylhydroxypolyoxyethylene and the like, and the present invention is not limited only to those exemplified ones.

From the viewpoint of improvement in polymerization stability, the amount of an emulsifier per 100 parts by mass of a monomer component is preferably at least 0.01 parts by mass, more preferably at least 0.5 parts by mass, further preferably at least 1 part by mass, and from the viewpoint of improvement in water resistance of a molded body, the amount of an emulsifier is preferably at most 10 parts by mass, more preferably at most 7 parts by mass, further preferably at most 5 parts by mass.

Examples of the polymerization initiator include, for example, azo compounds such as azobisisobutyronitrile, 2,2-azobis(2-methylbutyronitrile), 2,2-azobis(2,4-dimethylvaleronitrile), 2,2-azobis(2-diaminopropane) hydrochloride, 4,4-azobis(4-cyanovaleric acid) and 2,2-azobis(2-methylproplonamidine); persulfuric acid salts such as potassium persulfate; peroxides such as hydrogen peroxide, benzoyl peroxide, parachlorobenzoyl peroxide, lauroyl peroxide and ammonium peroxide, and the like, and the present invention is not limited only to those exemplified ones. These polymerization initiators can be used alone, respectively, or at least two kinds thereof can be used together.

The amount of the polymerization initiator per 100 parts by mass of the monomer component is preferably at least 0.01 parts by mass, more preferably at least 0.05 parts by mass, further preferably at least 0.1 parts by mass from the viewpoint of enhancement of the polymerization rate and decrease of the amount of the remaining unreacted monomer component, and the amount of the polymerization initiator is preferably at most 1 part by mass, more preferably at most 0.8 parts by mass, further preferably at most 0.5 parts by mass from the viewpoint of improvement in water resistance of a molded body.

A method for adding the polymerization initiator is not particularly limited. Examples of the method for adding the polymerization initiator include, for example, a method which includes charging at a time, a method which includes charging in installments, a method which includes continuous dropwise addition, and the like. Also, from the viewpoint of acceleration of the completion of a polymerization reaction, a part of the polymerization initiator can be added before the completion or after the completion of addition of a monomer component to a reaction system.

Incidentally, in order to promote the decomposition of the polymerization initiator, for example, a reducing agent such as sodium hydrogen sulfite, or an agent for decomposing the polymerization initiator, such as a transition metal

salt such as ferrous sulfate can be added to a reaction system in an appropriate amount.

Furthermore, in order to control the weight average molecular weight of emulsion particles, a chain transfer agent can be used. Examples of the chain transfer agent include, for example, 2-ethylhexyl thioglycolate, tert-dodecylmercaptan, n-octylmercaptan, n-dodecylmercaptan, mercaptoacetic acid, mercaptopropionic acid, 2-mercaptoethanol, α-methylstyrene, α-methylstyrene dimer and the like, and the present invention is not limited only to those exemplified ones. These chain transfer agents can be used alone, respectively, or at least two kinds thereof can be used together. It is preferred that the amount of the chain transfer agent per 100 parts by mass of the monomer component is 0.01 to 10 parts by mass from the viewpoint of control of the weight average molecular weight of emulsion particles.

An additive such as a pH buffer, a chelating agent or a film-forming assistant can be added to a reaction system as occasion demands. Since the amount of the additive is different depending on the kind thereof, the amount cannot be absolutely determined. The amount of the additive per 100 parts by mass of a monomer component is usually preferably 0.01 to 5 parts by mass or so, more preferably 0.1 to 3 parts by mass or so.

The atmosphere where the monomer component is emulsion-polymerized is not particularly limited, and the atmosphere is preferably an inert gas such as nitrogen gas from the viewpoint of enhancement of the efficiency of a polymerization reaction.

The polymerization temperature in the emulsion polymerization of the monomer component is not particularly limited, and is usually preferably 0 to 100°C, more preferably 40 to 95°C. The polymerization temperature can be constant, or changed in the course of the polymerization reaction.

The polymerization period of time for the emulsion polymerization of the monomer component is not particularly limited, and can be appropriately controlled in accordance with the progress of the polymerization reaction, and is usually 2 to 8 hours or so.

Incidentally, when the monomer component is emulsion-polymerized, a part or all of acidic groups of the resulting polymer can be neutralized with a neutralizing agent. The neutralizing agent can be used after the addition of the monomer component at the final stage. The neutralizing agent can be used, for example, between the first stage polymerization reaction and the second stage polymerization reaction, or can be used at the completion of the initial emulsion polymerization reaction.

Examples of the neutralizing agent include, for example, hydroxides of an alkali metal or an alkaline earth metal, such as sodium hydroxide; carbonates of an alkali metal or an alkaline earth metal, such as calcium carbonate; and alkaline substances such as ammonia, and organic amines such as monomethylamine, and the present invention is not limited only to those exemplified ones. Among these neutralizing agents, an alkaline substance having volatility, such as ammonia is preferable from the viewpoint of improvement in water resistance of a molded body.

Furthermore, when a monomer component is emulsion-polymerized, a silane coupling agent can be used in an appropriate amount from the viewpoint of improvement in water resistance of a molded body. Examples of the silane coupling agent include, for example, silane coupling agents having a polymerizable unsaturated group such as (meth)acryloyl group, vinyl group, allyl group or propenyl group, and the like, and the present invention is not limited only to those exemplified ones.

A resin emulsion is obtained by emulsion-polymerizing the monomer component as described above. Emulsion particles contained in the resin emulsion can be composed of only one kind of a polymer prepared by one stage emulsion polymerization. It is preferred that the emulsion particles have a polymer layer of a multilayer structure prepared by multistage emulsion-polymerizing a monomer component from the viewpoint of satisfaction in both hardness and molding accuracy of a molded body.

Also, it is preferred that the emulsion particles have a polymer layer of a multilayer structure and that the emulsion particles are made of a (meth)acrylic polymer from the viewpoint of improvement in moldability, and hardness and molding accuracy of a molded body. Incidentally, the emulsion particles which have a polymer layer of a multilayer structure and which are made of a (meth)acrylic polymer mean emulsion particles having a polymer layer of a multilayer structure, in which a (meth)acrylic monomer is used as an essential component in the monomer component used for the polymer for forming the polymer layer. When the emulsion particle has plural polymer layers, the number of the polymer layers is not particularly limited, and is preferably 2 to 5 layers, more preferably 2 to 4 layers, further preferably 2 or 3 layers.

It is preferred that the emulsion particle has a multilayer structure having at least two layers of an outer layer and an inner layer from the viewpoint of improvement in water resistance and luster of a molded body, and enhancement of hardness of a molded body. The emulsion particle having a multilayer structure can be easily prepared by the above-mentioned multistage emulsion polymerization method. For example, the emulsion particle having a two-layer structure can be easily prepared by carrying out a first stage emulsion polymerization for forming an inner layer and a second stage emulsion polymerization for forming an outer layer. These emulsion polymerizations are carried out in the order of the emulsion polymerization for forming an inner layer and the emulsion polymerization for forming an outer layer.

Incidentally, in the preparation of emulsion particles having a multilayer structure, one stage or plural stages of emulsion polymerization can be carried out before the emulsion polymerization for forming the above-mentioned inner

layer is carried out, or one stage or plural stages of emulsion polymerization can be carried out between the emulsion polymerization for forming the above-mentioned inner layer and the emulsion polymerization for forming the above-mentioned outer layer. Furthermore, one stage or plural stages of emulsion polymerization can be carried out after the emulsion polymerization for forming the above-mentioned outer layer.

When the glass transition temperature of the polymer constituting the outer layer of the emulsion particles is controlled to be low, and the film thickness of the outer layer and the composition of the monomer component constituting the outer layer are appropriately controlled, as well as the glass transition temperature of the emulsion particles having a multilayer structure is appropriately controlled, emulsion particles which have high hardness and is excellent in abrasion resistance can be prepared while maintaining the moldability equal to or greater than that of emulsion particles made of an acrylic polymer having low hardness.

From the viewpoint of improvement in hardness, water resistance and luster of a molded body obtained by using the molding material of the present invention, it is more preferable that a polymer constituting the outer layer is different from a polymer constituting the inner layer in the resin emulsion containing emulsion particles having at least two layers of an outer layer and an inner layer. A molding material containing the resin emulsion including the emulsion particles has an advantage such that the molding material is excellent in moldability even when the molding material does not contain a volatile organic solvent (VOC), and that a molded body formed from the molding material is excellent in hardness, water resistance and luster of a molded body.

The above-mentioned phrase "a polymer constituting the outer layer is different from a polymer constituting the inner layer" means that the ingredient in monomer components used as a starting material of these polymers is different from each other, or that the structure or the molecular weight of the polymers is different from each other. Examples of the case where the polymer constituting the above-mentioned outer layer is different from the polymer constituting the inner layer include a case where the kinds of monomers used in the monomer are different from each other, a case where the amount of the monomer used is different from each other when the same kind monomer is used, and a case where the molecular weight or the structure of the polymer is different from each other, and the like.

In the emulsion particles having at least two layers of an inner layer and an outer layer, one layer or plural layers can be formed inside the inner layer, one layer or plural layers can be formed between the inner layer and the outer layer, or one layer or plural layers can be formed outside the outer layer. Incidentally, each layer can be compatible with each other, and the boundary part between the layers is not always clear.

Incidentally, the glass transition temperature of the polymer constituting the emulsion particles can be determined from the glass transition temperature (Tg) (absolute temperature: K) of a homopolymer made of a monomer contained in a monomer component which is used as a starting material of the polymer, and the mass fraction of the monomer, based on the Fox's formula represented by the formula (I):

$$1/Tg = W_1/Tg_1 + W_2/Tg_2 + W_3/Tg_3 + \cdots + W_n/Tg_n \quad \text{(I)}$$

wherein Tg represents the glass transition temperature (K) of a polymer to be determined, each of $W_1$, $W_2$, $W_3$....$W_n$ represents the mass fraction of each monomer, and each of $Tg_1$, $Tg_2$, $Tg_3$....$Tg_n$ represents the glass transition temperature (K) of a homopolymer made of a monomer corresponding to the mass fraction of each monomer.

In the present description, the glass transition temperature of the polymer constituting the emulsion particles means a glass transition temperature as determined by the formula (I). For example, the glass transition temperature of the whole polymer constituting the emulsion particles having a multilayer structure means a glass transition temperature which is obtained from the mass fraction of each monomer in all the monomer components used in multistage emulsion polymerization and the glass transition temperature of a homopolymer made of a monomer corresponding to this mass fraction.

Incidentally, regarding a monomer of which glass transition temperature is unknown, such as a special monomer or a polyfunctional monomer, its glass transition temperature is determined by using only monomers of which glass transition temperatures are known.

In view of this glass transition temperature of the polymer constituting the emulsion particles, the composition of the monomer components used as a starting material of the polymer constituting the emulsion particles can be determined.

The glass transition temperature of a homopolymer is, for example, 105°C (378 K) as to a homopolymer made of methyl methacrylate, 100°C (373 K) as to a homopolymer made of styrene, 83°C (356 K) as to a homopolymer made of cyclohexyl methacrylate, and 95°C (368 K) as to a homopolymer made of acrylic acid.

The outer layer of emulsion particles having a multilayer structure functions as a fusing layer when the resin emulsion is dried and the emulsion particles are fused with each other. The glass transition temperature of the polymer constituting the outer layer of the emulsion particles having a multilayer structure is preferably at least 0°C, more preferably

at least 20°C, further preferably at least 50°C from the viewpoint of enhancement of hardness of a molded body, and is preferably at most 120°C from the viewpoint of improvement in moldability.

The glass transition temperature of the polymer constituting the inner layer of the emulsion particles having a multilayer structure is preferably at least 80°C, more preferably at least 85°C from the viewpoint of enhancement of hardness of a molded body, and is preferably at most 200°C, more preferably at most 180°C from the viewpoint of improvement in moldability. The glass transition temperature of the polymer constituting the inner layer can be easily controlled by adjusting the composition of monomers used in the monomer component forming the inner layer.

The polymer constituting the inner layer can have a crosslinking structure. In both cases of the case where the polymer constituting the inner layer has a crosslinking structure and the case where the polymer does not have a crosslinking structure, the weight average molecular weight of the polymer constituting the inner layer is preferably at least 100000, more preferably at least 300000, further preferably at least 550000, particularly preferably at least 600000 from the viewpoint of enhancement of hardness of a molded body. When the polymer has a crosslinking structure, the upper limit of the weight average molecular weight of the polymer constituting the inner layer is not particularly limited due to the difficulty in measuring the weight average molecular weight thereof. When the polymer has no crosslinking structure, the weight average molecular weight thereof is preferably at most 5000000 from the viewpoint of improvement in moldability.

Incidentally, in the present description, the weight average molecular weight of a polymer means a weight average molecular weight (in terms of polystyrene) as measured by using gel permeation chromatography [manufactured by Tosoh Corporation under the item number of HCL-8120GPC, columns: TSKgel G-5000HXL and TSKgel GMHXL-L are used in series].

As described above, when the glass transition temperature of the polymer constituting the outer layer of the emulsion particles having a multilayer structure and the glass transition temperature of the polymer constituting the inner layer thereof are controlled, both moldability of the molding material and hardness of the molded body of the present invention can be achieved at the same time.

Furthermore, the glass transition temperature of the whole polymer constituting the emulsion particles having a multilayer structure is preferably at least 20°C from the viewpoint of enhancement of hardness of a molded body, and is preferably at most 120°C from the viewpoint of improvement in moldability.

The content of the inner layer in the emulsion particles having at least an outer layer and an inner layer is preferably at least 10% by mass, more preferably at least 15% by mass, further preferably at least 20% by mass, particularly preferably at least 25% by mass from the viewpoint of improvement in moldability, and is preferably at most 85% by mass, more preferably at most 80% by mass, further preferably at most 75% by mass, particularly preferably at most 70% from the viewpoint of enhancement of hardness of a molded body.

The content of the outer layer in the emulsion particles having at least an outer layer and an inner layer is preferably at least 10% by mass, more preferably at least 15% by mass, further preferably at least 20% by mass, particularly preferably at least 25% by mass from the viewpoint of enhancement of hardness of a molded body, and is preferably at most 80% by mass, more preferably at most 70% by mass, further preferably at most 60% by mass from the viewpoint of improvement in moldability.

Incidentally, in the present description, the content of each layer in the emulsion particles means the content of the monomer used in each layer in the whole monomer component used for the emulsion particles.

The polymer constituting the outer layer can have a crosslinking structure. In both cases of the case where the polymer constituting the outer layer has a crosslinking structure and the case where the polymer does not have a crosslinking structure, the weight average molecular weight of the polymer constituting the outer layer is preferably at least 100000, more preferably at least 300000, further preferably at least 550000, particularly preferably at least 600000 from the viewpoint of enhancement of hardness of a molded body. When the polymer has a crosslinking structure, the upper limit of the weight average molecular weight of the polymer constituting the outer layer is not particularly limited due to the difficulty in measuring the weight average molecular weight thereof. When the polymer has no crosslinking structure, the weight average molecular weight thereof is preferably at most 5000000 from the viewpoint of improvement in moldability.

The inner layer and the outer layer of the emulsion particles having a multilayer structure can have a crosslinking structure. From the viewpoint of improvement in moldability and hardness of a molded body, it is preferred that the inner layer has a crosslinking structure. The emulsion particles having a crosslinking structure can be prepared, for example, by emulsion-polymerizing the monomer component after adding a crosslinkable monomer such as a polyfunctional (meth)acrylate described later to a monomer component. The content of the crosslinkable monomer in the monomer component is preferably at least 1% by mass from the viewpoint of enhancement of hardness of a molded body, and is preferably at most 100% by mass, more preferably at most 75% by mass, further preferably at most 50% by mass from the viewpoint of improvement in moldability. These crosslinkable monomers can be used alone, or at least two kinds thereof can be used together.

The presence of at least two kinds of polymers having different glass transition temperatures in the emulsion

particles having a multilayer structure can be confirmed, for example, by measuring a differential scanning calorie (DSC) of a dried molded body of the emulsion particles.

The average particle diameter of the emulsion particles is preferably at least 70 nm, more preferably at least 80 nm, further preferably at least 100 nm from the viewpoint of improvement in dispersion stability of emulsion particles, and is preferably at most 450 nm, more preferably at most 400 nm, further preferably at most 350 nm from the viewpoint of improvement in surface smoothness of a molded body.

In the present description, the average particle diameter of the emulsion particles means a volume average particle diameter obtained by diluting a resin emulsion with distilled water, taking about 10 mL of the resulting diluted liquid in a glass cell, and measuring its average particle diameter by using a particle size distribution measuring instrument [manufactured by Particle Sizing Systems under the trade name of NICOM P Model 380] according to a dynamic light scattering method and Windows (registered trademark) Based Software.

The molding material of the present invention can be easily prepared by mixing a resin emulsion containing the emulsion particles prepared as described above, a polyfunctional (meth)acrylic acid ester and a polymerization initiator.

Examples of the polyfunctional (meth)acrylic acid ester include, for example, alkyldiol di(meth)acrylates having an alkyl group of 3 to 8 carbon atoms, such as 1,4-butanediol di(meth)acrylate and 1,6-hexanediol di(meth)acrylate, pentaerythritol mono hydroxytri(meth)acrylate, pentaerythritol tetra(meth)acrylate, pentaerythritol penta(meth)acrylate, pentaerythritol hexa(meth)acrylate, dipentaerythritol hexa(meth)acrylate, dipentaerythritol (monohydroxy)penta(meth)acrylate, ethylene glycol di(meth)acrylate, 1,3-butylene glycol di(meth)acrylate, ethylene oxide-modified 1,6-hexanediol di(meth)acrylate, 1,9-nonanediol di(meth)acrylate, propylene oxide-modified neopentyl glycol di(meth)acrylate, trimethylolpropane tri(meth)acrylate, trimethylolpropane triethoxytri(meth)acrylate, bisphenol A di(meth)acrylate, ditrimethylolpropane tetra(meth)acrylate, butadiene, isoprene, chloroprene, divinylbenzene, diallyl phthalate, ethoxylated glycerin tri(meth)acrylate, triallyl isocyanurate, propylene oxide-modified glycerol tri(meth)acrylate, ethylene oxide-modified trimethylolpropane tri(meth)acrylate, polyalkylene glycol (meth)acrylate, urethane (meth)acrylate, epoxy (meth)acrylate, polyester (meth)acrylate and the like, and the present invention is not limited only to those exemplified ones. These polyfunctional (meth)acrylic acid esters can be used alone, respectively, or at least two kinds thereof can be used together. It is preferred to use a polyfunctional (meth)acrylic acid ester by appropriately selecting one which is suitable for improving desired properties such as hardness and moldability of a molded body from those polyfunctional (meth)acrylic acid esters.

Incidentally, a polyfunctional (meth)acrylic acid ester can be used together with a monomer other than the polyfunctional (meth)acrylic acid ester as long as an object of the present invention is not hindered.

The amount of the polyfunctional (meth)acrylic acid ester per 100 parts by mass of a non-volatile matter of a (meth)acrylic resin emulsion is preferably at least 5 parts by mass, more preferably at least 10 parts by mass, further preferably at least 20 parts by mass from the viewpoint of improvement in hardness of a molded body, and is preferably at most 120 parts by mass, more preferably at most 100 parts by mass, further preferably at most 90 parts by mass from the viewpoint of improvement in moldability.

Examples of the above-mentioned polymerization initiator include, for example, a photopolymerization initiator and a thermal polymerization initiator, and the present invention is not limited only to those exemplified ones. These polymerization initiators can be used alone, respectively, or can be used together. Incidentally, some of photopolymerization initiators act as a thermal polymerization initiator, and some of thermal polymerization initiators act as a photopolymerization initiator. Therefore, polymerization initiators having both of a property of a photopolymerization initiator and a property of a thermal polymerization initiator can cure a molding material by irradiation of a light ray or heating.

Examples of the thermal polymerization initiator include, for example, oil-soluble initiators such as 2,2'-azobis-(2-methylbutyronitrile), 2,2'-azobisisobutyronitrile, 2,2'-azobis-(2,4'-dimethylvaleronitrile), benzoyl peroxide, 1,1-bis(tert-butylperoxy)-3,3,5-trimethylcyclohexane and tert-butylperoxy-2-ethyl hexanoate; persulfates such as potassium persulfate, ammonium persulfate and sodium persulfate; water-soluble peroxides such as hydrogen peroxide; water-soluble azo compounds such as 2,2'-azobis(2-amidinopropane) dihydrochloride, and the like, and the present invention is not limited only to those exemplified ones. These thermal polymerization initiators can be used alone, respectively, or at least two kinds thereof can be used together.

Examples of the photopolymerization initiator include, for example, benzophenone, 1-[4-(2-hydroxyethoxy)phenyl]-2-hydroxy-2-methyl-1-propane-1-one, oxyphenyl-acetic acid 2-[2-oxo-2-phenylacetoxyethoxy]-ethyl ester, oxyphenylacetic acid 2-[2-hydroxyethoxy]-ethyl ester, 1-hydroxycyclohexyl phenyl ketone, bis(2,4,6-trimethylbenzoyl)-phenylphosphine oxide, 2-hydroxy-2-methyl-1-phenylpropane-1-one, 1-(4-isopropylphenyl)-2-hydroxy-2-methylpropane-1-one, 2-methyl-1-[4-(methylthio)-phenyl]-2-morpholinopropane-1-one, 2-morpholinopropane-1-one, iodonium, (4-methylphenyl[4-(2-methylpropyl)phenyl])-hexafluorophosphate, diethylthioxanthone, isopropylthioxanthone and the like, and the present invention is not limited only to those exemplified ones. These photopolymerization initiators can be used alone, respectively, or at least two kinds thereof can be used together.

The polymerization initiator can be, for example, directly added to a (meth)acrylic resin emulsion, or used by

mixing with the above-mentioned polyfunctional (meth)acrylic acid ester.

Since the polyfunctional (meth)acrylic acid ester is used in the molding material of the present invention, the minimum film-forming temperature of the molding material of the present invention is lower than that of a molding material, in which the polyfunctional (meth)acrylic acid ester is not used. Since the minimum film-forming temperature of the molding material of the present invention is usually 0 to 60°C, the molding material is excellent in moldability. The minimum film-forming temperature of the molding material of the present invention can be easily controlled by adjusting the kind and amount of the polyfunctional (meth)acrylic acid ester.

The minimum film-forming temperature means a temperature at the boundary between a film-formed portion and a non-film-formed portion when a molding material is applied in the form of a bell to a flat plate having an appropriate temperature gradient. The minimum film-forming temperature is defined as "the lowest temperature at which a uniform molded body having no crack is formed". The minimum film-forming temperature can be determined, for example, in accordance with JIS K6828-2 (2003). More specifically, in the present invention, the minimum film-forming temperature(°C) is determined by forming a molded body having a thickness of 250 μm on a grooveless flat plate made of stainless steel with an applicator, and measuring the lowest temperature at which a uniform molded body having no crack is formed by using an MFT tester [manufactured by Tester Sangyo Co., Ltd. under the item number of TP-801 LT]. The presence or absence of crack on a molded body can be determined by naked eyes in accordance with JIS K6828-2. Incidentally, when the minimum film-forming temperature of a molding material is not higher than 0°C, the minimum film-forming temperature of the molding material is regarded as 0°C.

It is preferred that the minimum film-forming temperature of the molding material of the present invention is at least 15°C lower than the molding temperature when a molded body is produced by using the molding material from the viewpoint of improvement in moldability. Incidentally, when a pattern is formed with the molding material of the present invention, for example, by an imprint method, the above-mentioned molding temperature is a temperature at which the molding material of the present invention is applied to a substrate, and a molding die having a predetermined concave/convex structure is pushed against the surface of the formed molding material layer.

The amount of a non-volatile matter in the molding material of the present invention is preferably at least 30% by mass, more preferably at least 40% by mass from the viewpoint of improvement in productivity, and is preferably at most 70% by mass, more preferably at most 60% by mass from the viewpoint of improvement in handling property.

Incidentally, in the present description, the amount of a non-volatile matter in the molding material means a value obtained by weighing 1 g of the molding material, drying the molding material with a hot air drier at a temperature of 110°C for 1 hour to obtain a residue as a nonvolatile component, and determining the amount of non-volatile matter in accordance with the equation:

$$[\text{Amount of non-volatile matter in molding material (\% by mass)}]$$
$$= ([\text{Mass of residue}] \div [\text{1 g of molding material}]) \times 100.$$

The molding material of the present invention obtained as described above can contain a pigment. Examples of the pigment include an organic pigment and an inorganic pigment, and these can be used alone, respectively, or at least two kinds thereof can be used together.

Examples of the organic pigment include, for example, benzidine, azo pigments such as Hansa Yellow, azomethine pigments, methine pigments, anthraquinone pigments, phthalocyanine pigments such as phthalocyanine blue, perynone pigments, perylene pigments, diketopyrrolopyrrole pigments, thioindigo pigments, iminoisoindoline pigments, iminoisoindolinone pigments, quinacridone pigments such as quinacridone red and quinacridone violet, flavanthrene pigments, indanthrone pigments, anthrapyrimidine pigments, carbazole pigments, monoarylide yellow, diarylide yellow, benzoimidazolone yellow, tolyl orange, naphthol orange, quinophthalone pigments and the like, and the present invention is not limited only to those exemplified ones. These organic pigments can be used alone, respectively, or at least two kinds thereof can be used together.

Examples of the inorganic pigment include, for example, inorganic pigments having a flat shape, such as mica, clay, aluminum powder, talc and aluminum silicate, as well as titanium dioxide, antimony trioxide, zinc flower, lithopone, white lead, red iron oxide, black iron oxide, iron oxide, chromium oxide green, carbon black, chrome yellow, molybdenum red, ferric ferrocyanide (Prussian Blue), ultramarine and lead chromate, and extender pigments such as calcium carbonate, magnesium hydroxide, aluminum hydroxide, barium sulfate and magnesium carbonate, and the like, and the present invention is not limited only to those exemplified ones. These inorganic pigments can be used alone, respectively, or at least two kinds thereof can be used together.

The amount of the pigment per 100 parts by mass of the non-volatile matter of a resin emulsion used in a molding material is preferably at least 20 parts by mass, more preferably at least 40 parts by mass, further preferably at least 60 parts by mass from the viewpoint of sufficient coloring of a molded body, and is preferably at most 200 parts

by mass from the viewpoint of improvement in moldability.

A resin such as a water-soluble resin or a water-dispersible resin, which is other than the (meth)acrylic resin used in the above-mentioned (meth)acrylic resin emulsion can be contained in the molding material of the present invention as long as an object of the present invention is not hindered. Also, for example, additives such as ultraviolet absorbers, ultraviolet inhibitors, fillers, leveling agents, surface conditioners, dispersants, thickeners, wetting agents, plasticizers, stabilizers, dyes and antioxidants can be contained in the molding material of the present invention in an appropriate amount as long as an object of the present invention is not hindered.

It is preferred that the content of a volatile organic compound in the molding material of the present invention is not more than 1% by mass from the viewpoint of reduction of the load on the environment. Also, the amount of a non-volatile matter in the molding material of the present invention is preferably at least 20% by mass, more preferably at least 30% by mass from the viewpoint of improvement in productivity, and is preferably at most 80% by mass, more preferably at most 70% by mass from the viewpoint of improvement in moldability. The amount of a non-volatile matter in the molding material of the present invention can be easily controlled by controlling the amount of the solvent, the amount of the additive and the like.

When the molding material of the present invention is cured by irradiation with an ultraviolet ray, the molding material can be cured by irradiating the molding material with an ultraviolet ray for a few seconds to a few minutes by using a light source mainly having a wavelength region of 1900 to 3800 angstroms although these conditions differ depending on conditions such as the kind of a light source for generating an ultraviolet ray and the distance between the light source and the molding material.

When the molding material of the present invention is cured by irradiation with an electron beam, the molding material can be cured by irradiating the molded body with an electron beam so that the absorbed dose becomes 1 to 20 Mrad or so in an acceleration voltage suitable for the molding material. Irradiation with an electron beam can be carried out in the atmosphere, and is preferably carried out in an inert gas such as nitrogen gas.

When the molding material of the present invention is cured by irradiating the molding material with an ultraviolet ray or an electron beam, there is an advantage such that the molding material experiences little heat history. Incidentally, after irradiating the molding material of the present invention with an ultraviolet ray or an electron beam, curing can be promoted by heating the molding material as occasion demands as long as an object of the present invention is not hindered.

When the molding material of the present invention is cured by heating, the molding material can be cured by heating a molded body for 0.5 to 60 minutes or so, preferably 5 to 20 minutes or so in a drier at a temperature of 50 to 200°C, preferably 100 to 180°C. Examples of the drier include, for example, a jet oven, a hot air drier and the like, and the present invention is not limited only to those exemplified ones. Incidentally, in heating of the molding material, preheating of the molding material can be carried out as occasion demands.

A resin film obtained from the molding material of the present invention can be used, for example, as a resin film used for a packaging material or the like as it is, a molded body obtained by molding with a molding die so that the molded body has a predetermined shape such as a cell or a container, or a starting material of a resin film in producing a laminated body including a resin film and a substrate.

Examples of a method for producing a resin film include, for example, solution film forming methods such as a solution flow casting method and a solution casting method; melt film forming methods such as a melt extrusion method and an extrusion molding method; a calender method; a press molding method and the like, and the present invention is not limited only to those exemplified ones. In these methods, the solution film forming method and the melt film forming method are preferable since they are excellent in productivity of a resin film.

Furthermore, the resin film can be stretched. Stretching of the resin film can be uniaxial stretching or biaxial stretching. Uniaxial stretching can be longitudinal stretching (stretching in a rewinding direction of a resin film) or transverse stretching (stretching in a width direction of a resin film). In case of longitudinal stretching, stretching can be free end uniaxial stretching in which the change in a width direction of a resin film is free, or can be fixed end uniaxial stretching in which the change in a width direction of a resin film is fixed. Biaxial stretching can be sequential biaxial stretching in which transverse stretching is carried out after longitudinal stretching, or simultaneous biaxial stretching in which longitudinal stretching and transverse stretching are carried out simultaneously. In addition, stretching in a direction of the thickness of a resin film or stretching in an oblique direction relative to a roll of a resin film can be carried out. It is preferred that the stretching method, the stretching temperature and the stretching ratio are appropriately selected in accordance with the optical property, mechanical strength and the like of an objective resin film.

The thickness of the resin film is preferably at least 1 μm, more preferably at least 2 μm, further preferably at least 5 μm, still further preferably at least 10 μm from the viewpoint of improvement in film strength, and is preferably at most 350 μm, more preferably at most 250 μm, further preferably at most 200 μm, still further preferably at most 150 μm, particularly preferably at most 100 μm from the viewpoint of thinning of a resin film.

The resin film can be used without curing. Alternatively, the resin film can be used in a cured state. Examples of a method for curing the resin film include, for example, a method of curing the resin film by irradiating the resin film

with an ultraviolet ray, a method of curing the resin film by irradiating the resin film with an electron beam, a method of curing the resin film by heating the resin film and the like, and the present invention is not limited only to those exemplified ones. It is preferred that these curing methods are appropriately selected in accordance with the kind of a polymerization initiator used for the molding material of the present invention.

The resin film can be handled, for example, as a roll by winding the resin film. When the resin film is tacky, in order to prevent resin films from being adhered to each other, a release paper or a release film can be provided on at least one surface of the resin film as occasion demands.

The molded body of the present invention is obtained by molding the molding material of the present invention and curing the molding material. The molded body of the present invention can be produced, for example, by a stamping molding method, an in-mold molding method, a nanoimprint molding method or the like with the molding material of the present invention. For example, when the molded body of the present invention is produced by a stamping molding method, a molded body having a predetermined shape can be produced by applying the molding material of the present invention to a substrate to form a molding material layer by means of a method such as spray coating, roller coating, brush coating, trowel coating, roll coating, bar coating, die coating, comma coating, gravure coating, kiss coating, spin coating, dip coating, curtain coating, doctor blade coating, knife coating, air knife coating, die coating, microgravure coating, offset gravure coating or lip coating, pressing the molding material layer with a molding die so that a predetermined shape is imparted to the formed molding material layer, and then curing this molding material layer.

An embodiment of the molded body of the present invention will be more specifically explained below with reference to Fig. 1, and the present invention is not limited only to the embodiment illustrated in Fig. 1. Fig. 1 is a schematic cross-sectional view showing one embodiment of the molded body of the present invention having a simple structure. In Fig. 1, a molding material layer 1 formed from the molding material of the present invention is provided on a substrate 2. The molding material layer 1 can be uncured, or can be cured as occasion demands. Furthermore, a desired shape such as a concave/convex shape can be imparted to the surface of the molding material layer 1.

A molded body, in which the molding material layer 1 having a desired shape on its surface is formed on the substrate 2, can be produced, for example, in accordance with an embodiment of a method for producing a molded body as described in the following Fig. 2 to 4, and the present invention is not limited only to the embodiment described in the drawings.

Fig. 2 is a schematic explanation view showing one embodiment of a method for producing a molded body made of the molding material of the present invention. According to the embodiment shown in Fig. 2, a molded body, in which a molding material layer 1 having a predetermined shape is formed on a substrate 2, can be produced by applying the molding material of the present invention to the substrate 2, to provide the molding material layer 1 formed from the molding material on the surface of the substrate 2, pressing a molding die 3 against the molding material layer 1 before curing of the molding material layer 1, to impart a desired shape to the molding material layer 1, and then curing the molding material layer 1 in the state where the molding material layer 1 is pressed with the molding die 3 or after removing the molding die 3 from the molding material layer 1.

Fig. 3 is a schematic explanation view showing another embodiment of a method for producing a molded body made of the molding material of the present invention. According to the embodiment shown in Fig. 3, a molded body, in which a molding material layer 1 having a predetermined shape is formed on a substrate 2, can be produced by applying the molding material of the present invention to a film-shaped substrate 2a, to provide a molding material layer 1 formed from the molding material on the surface of the film-shaped substrate 2a; placing the molding material layer 1 on the substrate 2, thereafter pressing a molding die 3 on the film-shaped substrate 2a, the molding material layer 1 and the substrate 2 before curing of the molding material layer 1, to impart a predetermined shape to the molding material layer 1 and the substrate 2; and curing the molding material layer 1 in the state where the molding material layer 1 is pressed with the molding die 3 or after removing the molding die 3 and the film-shaped substrate 2a from the molding material layer 1 from the molding material layer 1.

Fig. 4 is a schematic explanation view showing another embodiment of a method for producing a molded body made of the molding material of the present invention. According to the embodiment shown in Fig. 4, a molded body, in which a molding material layer 1 having a predetermined shape is formed on a substrate 2 can be produced by applying the molding material of the present invention to the substrate 2, to provide the molding material layer 1 formed from the molding material on the surface of the substrate 2; pressing a molding die 3 against the molding material layer 1 before curing of the molding material layer 1, to impart a predetermined shape to the molding material layer 1; and curing the molding material layer 1 in the state where the molding material layer 1 is pressed with the molding die 3 or after removing the molding die 3 from the molding material layer 1.

Incidentally, examples of the material constituting the substrate 2 include, for example, a glass plate; acrylic resins such as polymethyl (meth)acrylate and a (meth)acrylic polymer having a ring structure in its main chain; polyesters such as polyethylene terephthalate and polybutylene terephthalate; cyclic olefin polymers such as a norbornene polymer; cellulose polymers such as cellulose triacetate, cellulose acetate propionate and cellulose acetate butyrate; polyolefin resins such as polyethylene and polypropylene; polycarbonates; polystyrenes; vinyl chloride resins; ABS resins; AS

resins; polyamides; and the like, and the present invention is not limited only to those exemplified ones.

Also, examples of the material constituting the film-shaped substrate 2a include, for example, thermoplastic resins such as acrylic resins such as polymethyl (meth)acrylate and a (meth)acrylic polymer having a ring structure in its main chain; polyesters such as polyethylene terephthalate and polybutylene terephthalate; cyclic olefin polymers such as a norbornene polymer; cellulose polymers such as cellulose triacetate, cellulose acetate propionate and cellulose acetate butyrate; polyolefin resins such as polyethylene and polypropylene; polycarbonates; polystyrenes; vinyl chloride resins; ABS resins; AS resins; and polyamides; and the like, and the present invention is not limited only to those exemplified ones.

When a molded body is produced by an imprint method with the molding material of the present invention, examples of the molding method include, for example, the following methods, and the present invention is not limited only to those exemplified ones.

(1) When a molding material which is cured by irradiation with an active energy ray such as an electron beam or an ultraviolet ray is used as the molding material of the present invention, examples of the molding method include a method for producing a molded body having a predetermined shape by applying the molding material of the present invention to a substrate, pushing a molding die having a predetermined concave/convex structure against the formed molding material layer at room temperature or under the condition of heating, irradiating the molding material layer with an active energy ray in this state or after removing the molding die, to cure the molding material layer, and the like. According to this method, a molding material layer can be cured by irradiating the molding material layer with an active energy ray through a substrate and/or a molding die in which at least one of the substrate and the molding die is made of a material through which an active energy ray transmits.

(2) When a molding material which is cured by heating is used as the molding material of the present invention, examples of the method for producing the molding method include a method for applying the molding material of the present invention to a substrate to produce a molded body having a predetermined shape, pushing a molding die having a predetermined concave/convex structure against the formed molding material layer at room temperature or under the condition of heating, heating the molding material layer under the above condition or after removing the molding die, to cure the molding material layer, and the like.

(3) When a thermoplastic molding material is used as the molding material of the present invention, examples of the molding method include a method for producing a molded body having a predetermined shape by applying the molding material of the present invention to a substrate, heating the formed molding material layer to soften, pushing a molding die having a predetermined concave/convex structure against the softened molding material layer, cooling the molding material layer under the above condition or after removing the molding die, to cure the molding material layer, and the like.

Incidentally, examples of the shape of the concave/convex structure formed on the molding die include, for example, a fine pattern having a pitch width of at most 10 μm and the like, and the present invention is not limited only to the exemplified one.

As explained above, the molding material of the present invention can be suitably used in producing a molded body which is excellent in molding accuracy without using a silicone resin, and which has high hardness and excellent appearance.

As described above, the molded body of the present invention is one in which a molding material layer is formed on a substrate, and the molding material layer is formed from the molding material of the present invention. Representative examples of a molded body in which a molding material layer is formed on a substrate include a laminated film having a molding material layer formed from the molding material of the present invention on a film-shaped substrate as a substrate, and the like.

One embodiment of a molded body in which a molding material layer is formed on a film-shaped substrate as a substrate will be explained below with reference to drawings.

Fig. 5 is a schematic cross-sectional view showing one embodiment of a molded body obtained by using the molding material of the present invention. In Fig. 5, a molding material layer 1 having a concave/convex structure is formed on one surface of a substrate 2. According to the embodiment as shown in Fig. 5, the molding material layer 1 is formed on only one surface of the substrate 2. However, the molding material layer 1 can be formed on both surfaces of the substrate 2.

A film-shaped substrate can be suitably used as the substrate 2 since the film-shaped substrate is excellent in moldability. Examples of the film-shaped substrate include, for example, a film-shaped substrate which is transparent and has heat resistance (hereinafter referred to as a transparent heat-resistant film-shaped substrate), and the like. Examples of the transparent heat-resistant film-shaped substrate include, for example, a film-shaped substrate containing a polymer having a ring structure in its main chain and the like, and the present invention is not limited only to those exemplified ones. Examples of the above-mentioned polymer having a ring structure in its main chain include, for example, (meth)acrylic polymers having a ring structure in its main chain; cyclic olefin polymers such as a norbornene polymer; cellulose polymers such as cellulose triacetate, cellulose acetate propionate and cellulose acetate butyrate; and the like,

and the present invention is not limited only to those exemplified ones. In these polymers having a ring structure in its main chain, a (meth)acrylic polymer having a ring structure in its main chain is preferable from the viewpoint of high light transmittance, low refractive index, excellent transparency, excellent wavelength dependency, excellent optical property and excellent processability.

The (meth)acrylic polymer having a ring structure in its main chain has a ring structure and a constituent unit derived from a (meth)acrylic acid ester in its main chain. It is preferred that the ring structure of the (meth)acrylic polymer having a ring structure in its main chain has at least one group selected from the group consisting of an ester group, an imide group and an acid anhydride from the viewpoint of improvement in heat resistance. Examples of a suitable ring structure include, for example, lactone ring structures; cyclic imide structures such as a ring structure derived from N-alkyl-substituted maleimide and a glutarimide ring; cyclic acid anhydride structures such as a ring structure derived from maleic anhydride and a ring structure derived from glutaric anhydride, and the like, and the present invention is not limited only to those exemplified ones. In the ring structures, at least one structure selected from the group consisting of a lactone ring structure, a glutarimide ring structure and a glutaric anhydride structure is preferable since a positive inherent birefringence is imparted, thereby the positive birefringence and negative birefringence based on a structure derived from a (meth)acrylic acid ester monomer are cancelled with each other, and thereby the structure has a low birefringence even when a film-shaped substrate is stretched, and a lactone ring structure is more preferable since the lactone ring structure has an optical property such as low wavelength dependency.

The above-mentioned lactone ring structure can have a 4- to 8-membered ring. Since the lactone ring structure is excellent in stability of a ring structure, the lactone ring structure has preferably a 5- to 6-membered ring, and more preferably a 6-membered ring. In the lactone ring structures, a ring structure represented by the formula (II):

[Chemical formula 1]

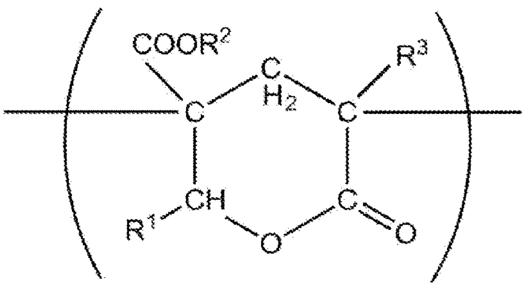

(II)

wherein each of $R^1$, $R^2$ and $R^3$ independently represents hydrogen atom or an organic group having 1 to 20 carbon atoms which may have oxygen atom, respectively, is preferable since a (meth)acrylic polymer having a high content of a lactone ring structure can be easily prepared, and the structure is excellent in copolymerizability with a (meth)acrylic acid ester such as methyl methacrylate. Examples of the above-mentioned organic group having 1 to 20 carbon atoms which may have oxygen atom include, for example, alkyl groups having 1 to 20 carbon atoms, such as methyl group, ethyl group and propyl group; unsaturated aliphatic hydrocarbon groups having 2 to 20 carbon atoms, such as ethenyl group and propenyl group; aromatic hydrocarbon groups having 6 to 20 carbon atoms, such as phenyl group and naphthyl group; groups in which at least one hydrogen atom of the above-mentioned alkyl group, the above-mentioned unsaturated aliphatic hydrocarbon group and the above-mentioned aromatic hydrocarbon group is substituted with at least one group selected from the group consisting of hydroxyl group, carboxyl group, an ether group and an ester group, and the like, and the present invention is not limited only to those exemplified ones.

The (meth)acrylic polymer having a ring structure in its main chain is prepared, for example, by polymerizing a monomer component containing a monomer having a ring structure and a (meth)acrylic acid ester.

Examples of the monomer having a ring structure include, for example, N-substituted maleimides such as cyclohexylmaleimide, methylmaleimide, phenylmaleimide and benzylmaleimide, maleic anhydride and the like, and the present invention is not limited only to those exemplified ones. These monomers having a ring structure can be used alone, respectively, or at least two kinds thereof can be used together.

Examples of the (meth)acrylic acid ester include, for example, (meth)acrylic acid (cyclo)alkyl esters in which the ester moiety thereof has 1 to 10 carbon atoms, such as methyl (meth)acrylate, ethyl (meth)acrylate, n-propyl (meth)acrylate, n-butyl (meth)acrylate, tert-butyl (meth)acrylate, n-hexyl (meth)acrylate and cyclohexyl (meth)acrylate; aralkyl (meth)acrylates in which the ester moiety thereof has 7 to 20 carbon atoms, such as benzyl (meth)acrylate; (meth)acrylic acid (cyclo)alkyl esters in which the number of carbon atom of the ester moiety is 1 to 10, and the ester moiety has a halogen atom or hydroxyl group, such as chloromethyl (meth)acrylate, 2-chloroethyl (meth)acrylate, 2-hydroxyethyl (meth)acrylate, 3-hydroxypropyl (meth)acrylate, 2,3,4,5,6-pentahydroxyhexyl (meth)acrylate and 2,3,4,5-tetrahydroxypentyl (meth)acrylate, and the like, and the present invention is not limited only to those exemplified ones. These (meth)acrylic acid esters can be used alone, respectively, or at least two kinds thereof can be used together. In these (meth)acrylic acid esters, methyl (meth)acrylate is preferable from the viewpoint of improvement in optical property and thermal stability of a film-shaped substrate.

In the monomer component, other monomers except for the monomer having a ring structure and a (meth)acrylic acid ester can be contained.

Examples of the above-mentioned other monomers include, for example, styrenic monomers such as styrene, vinyltoluene, α-methylstyrene, α-hydroxymethylstyrene and α-hydroxyethylstyrene; nitrile monomers such as (meth)acrylonitrile; olefin monomers such as ethylene, propylene and 4-methyl-1-pentene; oxygen atom-containing vinyl compounds such as vinyl acetate, 2-hydroxymethyl-1-butene and methyl vinyl ketone; nitrogen atom-containing vinyl compounds such as N-vinylpyrrolidone and N-vinylcarbazole, and the like, and the present invention is not limited only to those exemplified ones. These other monomers can be used alone, respectively, or at least two kinds thereof can be used together.

In addition, the (meth)acrylic polymer having a ring structure in its main chain can be also prepared, for example, by preparing a (meth)acrylic polymer, carrying out the cyclization reaction of the (meth)acrylic polymer to introduce a ring structure derived from a lactone ring structure, a glutaric anhydride structure, a glutarimide structure N-substituted maleimide or the like into its main chain. In this case, it is preferred that a monomer component used as a starting material of the (meth)acrylic polymer having a ring structure in its main chain contains a hydroxyl group-containing monomer or a carboxyl group-containing monomer. Both the hydroxyl group-containing monomer and the carboxyl group-containing monomer are changed into a ring structure by a cyclization reaction. Incidentally, the acrylic polymer having a ring structure in its main chain can contain a hydroxyl group derived from the hydroxyl group-containing monomer or a carboxyl group derived from the carboxyl group-containing monomer.

Examples of the hydroxyl group-containing monomer include, for example, 2-(hydroxymethyl)acrylic acid (cyclo)alkyl esters in which the ester moiety thereof has 1 to 10 carbon atoms, such as methyl 2-(hydroxymethyl)acrylate, ethyl 2-(hydroxymethyl)acrylate, isopropyl 2-(hydroxymethyl)acrylate and butyl 2-(hydroxymethyl)acrylate; 2-(hydroxyethyl)acrylic acid (cyclo)alkyl esters in which the ester moiety thereof has 1 to 10 carbon atoms, such as methyl 2-(hydroxyethyl)acrylate; allyl alcohol, methallyl alcohol and the like, and the present invention is not limited only to those exemplified ones. These hydroxyl group-containing monomers can be used alone, respectively, or at least two kinds thereof can be used together.

Examples of the carboxyl group-containing monomer include, for example, (meth)acrylic acid, crotonic acid, 2-(hydroxymethyl)acrylic acid, 2-(hydroxyethyl)acrylic acid and the like, and the present invention is not limited only to those exemplified ones. These carboxyl group-containing monomers can be used alone, respectively, or at least two kinds thereof can be used together.

The content of a ring structure in the (meth)acrylic polymer having a ring structure in its main chain is preferably at least 5% by mass, more preferably at least 10% by mass from the viewpoint of improvement in solvent resistance and surface hardness of a film-shaped substrate as well as improvement in heat resistance of a film-shaped substrate, and is preferably at most 90% by mass, more preferably at most 70% by mass, further preferably at most 60% by mass, still further preferably at most 50% by mass from the viewpoint of improvement in moldability and handling property of a film-shaped substrate. The content of a constituent unit derived from a (meth)acrylic acid ester in the (meth)acrylic polymer having a ring structure in its main chain is preferably at least 10% by mass, more preferably at least 30% by mass, further preferably at least 40% by mass, still further preferably at least 50% by mass, still further more preferably at least 70% by mass from the viewpoint of improvement in moldability and handling property of a film-shaped substrate, and is preferably at most 95% by mass, more preferably at most 90% by mass from the viewpoint of improvement in solvent resistance and surface hardness of a film-shaped substrate as well as improvement in heat resistance.

Also, the total content of a ring structure and a constituent unit derived from a (meth)acrylic acid ester in the (meth)acrylic polymer having a ring structure in its main chain is preferably at least 30% by mass, more preferably at least 50% by mass, further preferably at least 70% by mass, still further preferably at least 90% by mass from the viewpoint of improvement in optical property and surface hardness of a film-shaped substrate.

Examples of the (meth)acrylic resin having a lactone ring structure in its main chain include, for example, (meth)acrylic resins having a lactone ring structure and the like as described in Japanese Unexamined Patent Publication No. 2000-230016, Japanese Unexamined Patent Publication No. 2001-151814, Japanese Unexamined Patent Publication No. 2002-120326, Japanese Unexamined Patent Publication No. 2002-254544, Japanese Unexamined Patent Publication No. 2005-146084 and the like, and the present invention is not limited only to those exemplified ones. These (meth)acrylic resins having a lactone ring structure in its main chain can be used alone, respectively, or at least two kinds thereof can be used together.

Examples of the (meth)acrylic resin having a glutarimide structure in its main chain include, for example, (meth)acrylic resins having a glutarimide structure and the like as described in Japanese Unexamined Patent Publication No. 2006-309033, Japanese Unexamined Patent Publication No. 2006-317560, Japanese Unexamined Patent Publication No. 2006-328329, Japanese Unexamined Patent Publication No. 2006-328334, Japanese Unexamined Patent Publication No. 2006-337491, Japanese Unexamined Patent Publication No. 2006-337492, Japanese Unexamined Patent Publication No. 2006-337493, Japanese Unexamined Patent Publication No. 2006-337569, Japanese Unexamined Patent Publication No. 2007-009182 and the like, and the present invention is not limited only to those exemplified ones. These (meth)acrylic resins having a glutarimide structure in its main chain can be used alone, respectively, or at least two kinds thereof can be used together.

Examples of the (meth)acrylic resin having a glutaric anhydride structure in its main chain include, for example, (meth)acrylic resins having a glutaric anhydride structure and the like as described in Japanese Unexamined Patent Publication No. 2006-283013, Japanese Unexamined Patent Publication No. 2006-335902, Japanese Unexamined Patent Publication No. 2006-274118 and the like, and the present invention is not limited only to those exemplified ones. These (meth)acrylic resins having a glutaric anhydride structure in its main chain can be used alone, respectively, or at least two kinds thereof can be used together.

The weight average molecular weight of the (meth)acrylic polymer having a ring structure in its main chain is not particularly limited, and is preferably 10000 to 500000, more preferably 50000 to 300000.

It is preferable that the (meth)acrylic polymer having a ring structure in its main chain has thermoplasticity. The glass transition temperature (Tg) of the (meth)acrylic polymer having a ring structure in its main chain is preferably at least 100°C, more preferably at least 110°C, further preferably at least 115°C, still further preferably at least 120°C. The upper limit of the glass transition temperature (Tg) of the (meth)acrylic polymer having a ring structure in its main chain is not particularly limited, and is preferably at most 200°C, more preferably at most 180°C from the viewpoint of improvement in molding property of a film-shaped substrate.

The (meth)acrylic polymer having a ring structure in its main chain can be used together with other thermoplastic polymer. Examples of the other thermoplastic polymer include, for example, olefin polymers such as polyethylene, polypropylene, ethylene-propylene copolymer and poly(4-methyl-1-pentene); halogenated vinyl polymers such as a vinyl chloride resin, a vinylidene chloride resin and a chlorinated vinyl resin; (meth)acrylic polymers such as polymethyl (meth)acrylate; styrenic polymers such as polystyrene, a styrene-methyl (meth)acrylate copolymer, a styrene-acrylonitrile copolymer and an acrylonitrile-butadiene-styrene block copolymer; polyesters such as polyethylene terephthalate, polybutylene terephthalate and polyethylene naphthalate; polyamides such as nylon 6, nylon 66 and nylon 610; polyacetals; polycarbonates; polyphenylene oxides; polyphenylene sulfides; polyether ether ketones; polysulfones; polyether sulfones; polyoxybenzylenes; polyamideimides; and gum polymers such as an ABS resin, a MBS resin and an ASA resin containing a rubber component such as a polybutadiene rubber or an acrylic rubber, and the like, and the present invention is not limited only to those exemplified ones. These other thermoplastic polymers can be used alone, respectively, or at least two kinds thereof can be used together.

In the above-mentioned other thermoplastic polymers, a styrenic polymer is preferable from the viewpoint of the production of a film-shaped substrate having a low phase difference by cancelling a positive phase difference of the acrylic polymer having a ring structure in its main chain with a negative phase difference, and a styrene-acrylonitrile copolymer is more preferable from the viewpoint of improvement in compatibility with a (meth)acrylic polymer. Also, from the viewpoint of imparting both a low phase difference and flexibility to a film-shaped substrate, gum polymers such as an ABS resin, an MBS resin and an ASA resin containing a rubber component such as a polybutadiene rubber or an acrylic rubber are preferable.

The amount of the above-mentioned other thermoplastic polymer per 100 parts by mass of the (meth)acrylic polymer having a ring structure in its main chain is not particularly limited, and the amount is usually preferably 0 to 50 parts by mass, more preferably 0 to 40 parts by mass, further preferably 0 to 30 parts by mass, still further preferably 0 to 20 parts by mass.

The (meth)acrylic polymer having a ring structure in its main chain can contain an additive. Examples of the additive include, for example, antioxidants; stabilizers such as a light stabilizer, a weathering stabilizer and a thermal stabilizer; reinforcing materials such as a glass fiber and a carbon fiber; ultraviolet absorbing agents; near-infrared absorbing agents; flame retardants; antistatic agents such as an anionic surfactant, a cationic surfactant and a nonionic surfactant; coloring agents such as an inorganic pigment, an organic pigment and a dye; fillers such as an organic filler and an inorganic filler; blocking preventing agents; resin modifiers; plasticizers; lubricants; phase difference reducing agents and the like, and the present invention is not limited only to those exemplified ones. These additives can be used alone, respectively, or at least two kinds thereof can be used together. In these additives, the ultraviolet absorbing agent is preferable.

Examples of the ultraviolet absorbing agent include, for example, benzophenone compounds such as 2-hydroxybenzophenone; salicylate compounds such as phenyl salicylate; benzoate compounds; triazole compounds such as (2,2'-hydroxy-5-methylphenyl)benzotriazole; triazine compounds such as a 2,4-bis(2,4-dimethylphenyl)-6-[2-hydroxy-4-(3-octyloxy-2-hydroxypropyloxy)-5-α-cumylphenyl]-s-triazine compound, a 2,4-bis(2,4-dimethylphenyl)-6-[2-hydroxy-4-(3-nonyloxy-2-hydroxy-propyloxy)-5-α-cumylphenyl]-s-triazine compound, a 2,4-bis(2,4-dimethyl-phenyl)-6- [2-hydroxy-4-(3-decyloxy-2-hydroxypropyloxy)-5-α-cumyl-phenyl]-s-triazine compound and a 2,4,6-tris(hdyroxyphenyl)-1,3,5-triazine compound, and the like, and the present invention is not limited only to those exemplified ones. These ultraviolet absorbing agents can be used alone, respectively, or at least two kinds thereof can be used together. In these ultraviolet absorbing agents, a triazine compound and a triazole compound are preferable since the triazine compound and the triazole compound are excellent in compatibility with an amorphous thermoplastic resin such as an acrylic resin, and absorptivity of an ultraviolet ray.

The content of the ultraviolet absorber in a film-shaped substrate is not particularly limited, and is preferably at least 0.1% by mass, more preferably at least 0.7% by mass, further preferably at least 1% by mass from the viewpoint of improvement in weather resistance of a film-shaped substrate, and is preferably at most 5% by mass, more preferably at most 3% by mass, further preferably at most 2% by mass from the viewpoint of improvement in mechanical strength and yellowing resistance of a film-shaped substrate.

The amount of the additive per 100 parts by mass of the (meth)acrylic polymer having a ring structure in its main chain is not particularly limited, and is preferably 0 to 5 parts by mass, more preferably 0 to 2 parts by mass, further preferably 0 to 0.5 parts by mass.

The (meth)acrylic polymer having a ring structure in its main chain, the additive and the like can be mixed, for example, by using a mixer such as an Omni mixer, an extruder such as a single screw extruder or a twin screw extruder or a mixer such as a pressure kneader.

Examples of the method for producing a film-shaped substrate include, for example, solution film forming methods such as a solution flow casting method and a solution casting method; melt film forming methods such as a melt extrusion method and an extrusion molding method; a calender method; a press molding method and the like, and the present invention is not limited only to those exemplified ones. In these methods, the solution film forming method and the melt film forming method are preferable since the solution film forming method and the melt film forming method are excellent in productivity of a film-shaped substrate.

Furthermore, the film-shaped substrate can be stretched. Stretching of the film-shaped substrate can be uniaxial stretching or biaxial stretching. The uniaxial stretching can be longitudinal stretching (stretching in a rewinding direction of a film-shaped substrate) or transverse stretching (stretching in a width direction of a film-shaped substrate). In the case of the longitudinal stretching, stretching can be free end uniaxial stretching in which the change in a width direction of a film-shaped substrate is free, or can be fixed end uniaxial stretching in which the change in a width direction of a film-shaped substrate is fixed. Biaxial stretching can be sequential biaxial stretching in which transverse stretching is carried out after longitudinal stretching, or can be simultaneous biaxial stretching in which longitudinal stretching and transverse stretching are carried out simultaneously. Alternatively, stretching in a direction of the thickness of a film-shaped substrate or stretching in an oblique direction relative to a roll of a film-shaped substrate can be carried out. The stretching method, the stretching temperature and the stretching ratio can be appropriately selected in accordance with optical property, mechanical strength and the like of an objective film-shaped substrate.

The film-shaped substrate is obtained by the aforementioned manner. The thickness of the film-shaped substrate is preferably at least 5 μm, more preferably at least 10 μm, further preferably at least 15 μm, still further preferably at least 20 μm from the viewpoint of enhancement of film strength, and is preferably at most 350 μm, more preferably at most 250 μm, further preferably at most 200 μm, still further preferably at most 150 μm, particularly preferably at most 100 μm from the viewpoint of thinning a laminated film.

The glass transition temperature of a resin used for the film-shaped substrate is preferably at least 100°C, more preferably at least 110°C, further preferably at least 115°C, still further preferably at least 120°C from the viewpoint of improvement in film formation accuracy of a film-shaped substrate. The upper limit of the glass transition temperature of the resin is not particularly limited, and is preferably at most 200°C, more preferably at most 180°C, further preferably at most 170°C, still further preferably at most 160°C from the viewpoint of improvement in film formation property of a film-shaped substrate.

The total light transmittance of the film-shaped substrate measured in accordance with the provision of JIS K7361-1 (1997) is preferably at least 85%, more preferably at least 90%, further preferably at least 92% from the viewpoint of improvement in transparency.

It is preferable that the film-shaped substrate has ultraviolet absorptivity. The light transmittance of the film-shaped substrate at a wavelength of 380 nm is preferably at most 30%, more preferably at most 20%, further preferably at most 10% from the viewpoint of prevention of deterioration from an ultraviolet ray. Incidentally, the light transmittance is a value as determined in accordance with the provision of JIS K7361 (1997).

It is preferable that the film-shaped substrate also has visible light permeability. The light transmittance of the film-shaped substrate at a wavelength of 500 nm is preferably at least 80%, more preferably at least 85%, further preferably at least 90% from the viewpoint of improvement in optical property. Incidentally, the light transmittance is a value as determined by the same manner as described above in accordance with the provision of JIS K7361 (1997).

It is desired that a film-shaped substrate is excellent in light permeability when the film-shaped substrate is used for an optical use. Therefore, the haze of the film-shaped substrate is preferably at most 3%, more preferably at most 1%, further preferably at most 0.5%. Incidentally, the haze of the film-shaped substrate is a value as determined

by a method described in the working examples mentioned later.

Furthermore, in the film-shaped substrate, from the viewpoint of reduction of coloration, the b-value in thickness of 250 μm is preferably at most 0.5, more preferably at most 0.3. Incidentally, the b-value of the film-shaped substrate is a value as determined by a method described in the working examples mentioned later.

There is a possibility that there arise defects in appearance of the film-shaped substrate, such as a defect due to a foreign matter contained in a starting material, a defect due to a foreign matter which is incorporated when producing a film-shaped substrate, a defect due to bubbles generated during molding, a defect such as a die line or a flaw caused by a molding machine such as a die or a roll during molding, and the like. It is preferred that such defects in appearance are lesser on the film-shaped substrate. More specifically, the number of defects having a diameter of at least 20 μm on the film-shaped substrate is preferably at most 1000/$m^2$, more preferably at most 500/$m^2$, further preferably at most 200/$m^2$, particularly preferably 0/$m^2$. The appearance defects such as a flaw on the film-shaped substrate can be reduced by filtration of a starting material, purification of the manufacturing surroundings, optimization of molding conditions, and the like.

It is preferable that the film-shaped substrate is excellent in heat resistance. In the present description, "heat resistance" means that the glass transition temperature (Tg) of the film-shaped substrate is at least 100°C when determined in accordance with the provision of JIS K7121. When the glass transition temperature of the film-shaped substrate is higher, since the temperature in molding by using a molding die can be raised, the difference between the minimum film-forming temperature and the molding temperature of a molding material can be increased, and thereby moldability of a molding material can be improved. Therefore, since the pressure during molding can be reduced as well as the molding period of time in producing a molded body can be shortened by raising the glass transition temperature of the film-shaped substrate, productivity of a molded body can be improved.

The glass transition temperature of the film-shaped substrate is preferably at least 100°C, more preferably at least 110°C, further preferably at least 115°C, still further preferably at least 120°C. On the other hand, the upper limit of the glass transition temperature of the film-shaped substrate is not particularly limited, and is preferably at highest 200°C, more preferably at highest 180°C from the viewpoint of film formability of a film-shaped substrate.

A functional coating layer can be formed on the surface of a film-shaped substrate as occasion demands. Examples of the functional coating layer include, for example, an antistatic layer, a pressure-sensitive adhesive layer, an adhesive layer, an easily adhesive layer, an easily sliding layer, a releasability-imparting layer, an anti-glare (non-glare) layer, an antifouling layer such as a photocatalyst layer, an antireflection layer, a hard coating layer, an ultraviolet ray-shielding layer, a hot ray-shielding layer, an electromagnetic wave-shielding layer, a gas barrier layer and the like, and the present invention is not limited only to those exemplified ones. The functional coating layer can be formed before stretching the film-shaped substrate, or after stretching the film-shaped substrate. Also, the functional coating layer can be formed on either an incident light surface or a light exit surface of the film-shaped substrate. Furthermore, when a functional coating layer is formed on both surfaces of the film-shaped substrate, the same or different kind of the functional coating layer can be formed on each surface. The functional coating layer can have a single layer structure or a multilayer structure formed by laminating the functional coating layers in the same kind or different kind.

The molded body of the present invention can be used, for example, in the form of a laminated film. The laminated film can be easily produced, for example, by applying the molding material of the present invention to a substrate such as a film-shaped substrate with a spray, a roller, a brush, a trowel or the like, or by means of a method such as roll coating, bar coating, die coating, comma coating, gravure coating, kiss coating, spin coating, dip coating, curtain coating, doctor blade coating, knife coating, air knife coating, die coating, microgravure coating, offset gravure coating or lip coating. The formed molding material layer does not have to be cured, or can be cured as occasion demands.

A concave/convex structure can be formed on the surface of the laminated film in order to, for example, suppress the reflection of a light ray on the surface of the laminated film or enhance the extraction efficiency of a light ray. In this case, the concave/convex structure has to be provided on at least one surface of the laminated film. It is preferable that the concave/convex structure is provided on the molding material layer formed from the molding material of the present invention since the molding accuracy is improved and the hardness is increased.

In the concave/convex structure which is provided on the surface of the laminated film, the average height of convex portions and the average depth of concave portions are preferably at least 100 nm, more preferably at least 200 nm, further preferably at least 250 nm, still further preferably at least 280 nm, respectively, from the viewpoint of exertion of a desired optical property, and are preferably at most 1000 nm, more preferably at most 600 nm, further preferably at most 500 nm, respectively, from the viewpoint of easy formation of a concave/convex structure.

Incidentally, in the present description, the convex portion means a portion which is protruded from the reference surface, and the concave portion means a portion which is recessed from the reference surface. The above-mentioned reference surface means the surface of a molding material layer.

The above-mentioned average height of convex portions and the above-mentioned average depth of concave portions can be determined by scanning the surface of a concave/convex structure, and measuring a displacement in the vertical direction of the concave/convex with a scanning probe microscope such as an atomic force microscope.

When the concave/convex structure provided on the surface of the laminated film is wavy, the average length from the highest portion (upper end of convex portion) to the deepest portion (lower end of concave portion) of the wave, that is, the average of the length from the highest portion to the deepest portion of the wave in the vertical direction relative to the film surface, in other words, the average difference in height is preferably at least 100 nm, more preferably at least 200 nm, further preferably at least 250 nm, still further preferably at least 280 nm from the viewpoint of exertion of desired optical property, and is preferably at most 1000 nm, more preferably at most 600 nm, further preferably at most 500 nm from the viewpoint of easy formation of the concave/convex structure.

Incidentally, in the present description, the average of the length from the highest portion to the deepest portion of the wave in the vertical direction relative to the film surface can be determined in the same manner as those in the above-mentioned average height of convex portions and the above-mentioned average depth of concave portions.

In the concave/convex structure which is provided on the surface of the laminated film, the average interval between convex portions, that is, the average pitch of convex portions (hereinafter, referred to as average pitch), and the average interval between concave portions, that is, the average pitch of concave portions is at most the wavelength of a visible ray (wavelength: 400 to 830 nm), preferably at most 400 nm, more preferably at most 370 nm, further preferably at most 350 nm from the viewpoint of enhancement of extraction efficiency of a light as well as improvement in antireflection characteristic of a laminated film, and are preferably at least 100 nm, more preferably at least 120 nm, further preferably at least 150 nm from the viewpoint of enhancement of extraction efficiency of a light as well as improvement in antireflection characteristic of a laminated film as described above.

In the concave/convex structure which is provided on the surface of the laminated film, it is preferred that the shape of the convex portion and the shape of the concave portion are appropriately selected in accordance with the use of the laminated film. For example, when the laminated film is used for an antireflection film, examples of the shapes of the convex portion and the concave portion include a cone shape, a triangular pyramid shape, a hanging bell shape and the like, and the present invention is not limited only to those exemplified ones. It is preferred that the shape of the convex portion and the shape of the concave portion have a structure in which the refractive index is continuously changed from the refractive index of the air to the refractive index of a material forming the lower end of the concave portion within the region of from the upper end of the convex portion to the lower end of the concave portion.

In the concave/convex structure which is provided on the surface of the laminated film, it is preferred that the convex portion and the concave portion are regularly arranged with each other, for example, in a square array, an array of three way or the like, from the viewpoint of enhancement of extraction efficiency of a light as well as improvement in antireflection characteristic of a laminated film.

The ratio of the occupancy area of the concave/convex structure to the unit area of the surface of the laminated film is preferably at least 40%, more preferably at least 60%, further preferably at least 80% from the viewpoint of suppression of reflection on the surface of a laminated film.

The total number of concave portions and convex portions on the surface of the laminated film per unit area of 1 $\mu m^2$ of the surface of the laminated film is preferably at least 4, more preferably at least 9, further preferably at least 16, and preferably at most 100, more preferably at most 90, further preferably at most 80 from the viewpoint of suppression of a reflection on the surface of the laminated film.

In the concave/convex structure which is provided on the surface of the laminated film, a value obtained by dividing the average height of convex portions or the average depth of concave portions by the average of the length from the highest portion to the deepest portion of the wave in the vertical direction relative to the film surface (hereinafter, the value is referred to as aspect ratio) is preferably at least 1, more preferably at least 1.5, further preferably at least 2 from the viewpoint of improvement in optical property, and is preferably at most 5, more preferably at most 3 from the viewpoint of accurate formation of a concave/convex structure.

The dynamic hardness of the laminated film in the pushing depth of 100 nm from the surface having a concave/convex structure is preferably at least 5 mN/$\mu m^2$, more preferably at least 8 mN/$\mu m^2$ from the viewpoint of improvement in releasability in molding as well as improvement in scratch resistance, and is preferably at most 50 mN/$\mu m^2$, more preferably at most 40 mN/$\mu m^2$ from the viewpoint of improvement in strength of the concave/convex structure and maintenance of the shape of the concave/convex structure.

When a concave/convex structure is formed on the surface of the laminated film, a molding die having a structure corresponding to the concave/convex structure of the surface of the laminated film on its surface can be used. When the above-mentioned molding die is used, the concave/convex shape formed on the surface of the molding die can be transferred onto the surface of the laminated film by pushing the molding die against the surface of the laminated film. Therefore, when a convex portion is formed on the surface of the laminated film, a molding die having a shape of a concave portion corresponding to the shape of the convex portion can be used. When a concave portion is formed, a molding die having a shape of a convex portion corresponding to the shape of the concave portion can be used. On the other hand, when a convex portion and a concave portion are formed on the surface of the laminated film, a molding die having shapes of a concave portion and a convex portion corresponding to the shapes of the convex portion and the concave portion can be used.

The above-mentioned molded body can be produced, for example, by forming a molding material layer made of the molding material of the present invention on the film-shaped substrate, pushing a molding die having a concave/convex structure on the surface against the formed molding material layer, and thereafter curing the molding material layer on which a concave/convex structure corresponding to the concave/convex structure has been formed.

Incidentally, examples of a method for producing a molding die having a structure corresponding to a concave/convex structure of the surface of the laminated film on its surface include, for example, a method for producing a molding die, which includes dry etching the surface of a substrate made of silicon, quartz or the like through a mask such as a resist pattern which is formed by photolithography, electron beam lithography or the like; a method for producing a molding die, which includes using a master produced by dry etching the surface of a substrate made of silicon, quartz or the like, and producing a reproduction having a convex/concave structure being inverted to the concave/convex structure of the surface of the laminated film, and plating the reproduction, and the like, and the present invention is not limited only to those exemplified ones.

The above-mentioned laminated film has low reflectance of a light ray and is excellent in permeability of a light ray. Therefore, the laminated film can be used, for example, as a polarizer-protective film and the like.

Fig. 6 is a schematic cross-sectional view showing one embodiment of a polarizer-protective film obtained by using the molding material of the present invention. In the polarizer-protective film as shown in Fig. 6, a molding material layer 1 having a concave/convex structure on its surface is formed on one side surface of the film-shaped substrate 2a, and a polarizer 4 is formed on the surface of the film-shaped substrate 2a on which the molding material layer 1 is not formed. On the surface on which the film-shaped substrate 2a of the polarizer 4 is not formed, a phase difference film 5 is formed.

The polarizer-protective film can be produced, for example, by adhering the above-mentioned laminated film to a polarizer through an adhesive layer. Examples of the polarizer include, for example, uniaxially stretched polyvinyl alcohol polarizers in which a polyvinyl alcohol resin film is dyed with iodine, a dichroic dye or the like; polyene polarizers made of a dehydration product of polyvinyl alcohol, a dehydrochlorination product of polyvinyl chloride or the like; reflection type polarizers in which a multilayer laminated body or a cholesteric liquid crystal is used; thin membrane crystal film polarizers, and the like, and the present invention is not limited only to those exemplified ones. Among the polarizers, a uniaxially stretched polyvinyl alcohol polarizer is preferable. It is preferred that the thickness of the polarizer is usually 5 to 100 $\mu$m or so.

Examples of the adhesive agent include, for example, adhesive agents containing a polyvinyl alcohol resin, an acrylic resin, a polyurethane resin, a polyester resin or the like; adhesive agents curable with an active energy ray such as an ultraviolet ray or an electron beam; pressure-sensitive adhesive agents such as acrylic pressure-sensitive adhesive agents, silicone pressure-sensitive adhesive agents and rubber pressure-sensitive adhesive agents, and the like, and the present invention is not limited only to those exemplified ones. These adhesive agents can be used alone, respectively, or at least two kinds thereof can be used together.

An additive can be used in the adhesive agent. Examples of the additive include crosslinking agents, adhesion promoters, sensitizers, ultraviolet absorbers, antiaging agents, coloring agents such as dyes and pigments, processing aids, ion capture agents, antioxidants, tackifiers, fillers, plasticizers, leveling agents, defoaming agents, antistatic agents and the like, and the present invention is not limited only to those exemplified ones. These additives can be used alone, respectively, or at least two kinds thereof can be used together.

Examples of a method of adhering a laminated film to a polarizer with an adhesive agent include, for example, a method of applying an adhesive agent to the surface to be adhered of the polarizer by a method such as kiss coating, spin coating, roll coating, dip coating, curtain coating, bar coating, doctor blade coating, knife coating, air knife coating, die coating, gravure coating, microgravure coating, offset gravure coating, lip coating, spray coating or comma coating, and thereafter overlaying the surface to be adhered of the polarizer on the laminated film, and the present invention is not limited only to those exemplified ones. Incidentally, when the laminated film is adhered to the polarizer, it is preferred to arrange the laminated film and the polarizer so that the optical axis of the laminated film is orthogonal or parallel to the absorption axis of the polarizer.

The surface of the laminated film to be contacted with the polarizer can be subjected to an easy adhesion treatment in order to improve adhesiveness. Examples of the easy adhesion treatment include, for example, a plasma treatment, a corona treatment, an ultraviolet ray irradiation treatment, a solvent treatment, a flame treatment, a saponification treatment, formation of an anchor layer and the like, and the present invention is not limited only to those exemplified ones. These methods can be used alone, respectively, or at least two kinds thereof can be used together. In these methods, a corona treatment and formation of an anchor layer are preferable.

When the anchor layer is formed, as a polymer for forming the anchor layer, there can be used, for example, a polymer such as an acrylic polymer, a cellulose polymer, a urethane polymer, a silicone polymer, a polyester polymer, a polyethyleneimine polymer or an amino group-containing polymer. These polymers can be used alone, respectively, or at least two kinds thereof can be used together.

Also, when the anchor layer is formed, there can be used a coating composition containing the above-mentioned

polymer. The coating composition can contain, for example, an additive such as a crosslinking agent, a blocking preventing agent, a dispersion stabilizer, a thixotropic agent, an antioxidant, an ultraviolet absorber, an antifoaming agent, a thickener, a dispersant, a surfactant, a catalyst or an antistatic agent in addition to the above-mentioned polymer.

Examples of a means for applying the above-mentioned coating composition to the surface of the laminated film to be contacted with the polarizer include, for example, a bar coater, a roll coater, a gravure coater and the like, and the present invention is not limited only to those exemplified ones.

Examples of a method for drying the applied coating composition include, for example, a method of drying the coating composition preferably at a temperature of 50 to 130°C, more preferably 75 to 110°C by using a drier such as a hot air drier or an infrared ray drier, and the like, and the present invention is not limited only to those exemplified ones. After the coating composition is dried, the formed coated layer can be cured preferably at a temperature of 20 to 100°C, more preferably 20 to 50°C as occasion demands.

The thickness of the anchor layer after drying is preferably at least 0.01 μm, more preferably at least 0.05 μm, further preferably at least 0.1 μm from the viewpoint of enhancement of adhesion strength between the polarizer and the laminated film, and is preferably at most 10 μm, more preferably at most 5 μm, further preferably at most 3 μm, still further preferably at most 1 μm from the viewpoint of prevention of fading or discoloration of the polarizing plate.

Furthermore, the surface of the anchor layer can be subjected to, for example, a surface treatment such as a corona discharge treatment, a plasma treatment, ozone blowing, a solvent treatment, ultraviolet ray irradiation, a flame treatment or a chemical treatment.

The above-mentioned polarizer-protective film is excellent in optical property and heat resistance. Therefore, the polarizer-protective film can be suitably used, for example, as an optical film for protecting a polarizer of an image display device such as a liquid crystal display device (LCD) such as a VA type or an IPS type liquid crystal display device, an organic electroluminescence light emitting device (organic EL), a plasma display, an electronic paper, a 3D display or a field emission display (FED).

The above-mentioned laminated film has low reflectance of light and high extraction efficiency of light. Therefore, the laminated film can be suitably used for an organic electroluminescence (organic EL) light emitting device.

Fig. 7 is a schematic cross-sectional view showing one embodiment of an organic electroluminescence (organic EL) light emitting device obtained by using the molding material of the present invention. In the organic electroluminescence (organic EL) light emitting device shown in Fig. 7, a laminated film in which a molding material layer 1 having a concave/convex structure on its surface is laminated on a film-shaped substrate 2a is used. The laminated film is disposed on the light extracting surface side of the organic electroluminescence (organic EL) light emitting device. An anode electrode 8 made of indium tin oxide (ITO) or the like is connected to one surface of a light emitting layer 10 through a hole transport layer/hole injection layer 9. A cathode electrode 12 is connected to the other surface of the light emitting layer 10 through an electron transport layer/electron injection layer 11, and furthermore a transparent protective layer 13 is laminated on the cathode electrode 12. A glass substrate 7 is laminated on the anode electrode 8. The film-shaped substrate 2a of the laminated film is disposed on the glass substrate 7 through a pressure-sensitive adhesive layer 6. The molding material layer 1 of the laminated film is disposed so that the molding material layer 1 is positioned on the side of the light extracting surface of the organic electroluminescence (organic EL) light emitting device. A light ray generated in the light emitting layer 10 passes through the pressure-sensitive adhesive layer 6 and the film-shaped substrate 2a laminated on the glass substrate 7, and is extracted from the surface of the molding material layer 1.

According to the organic electroluminescence (organic EL) light emitting device as shown in Fig. 7, since the surface on which a concave/convex structure of the laminated film is formed is arranged so that the surface is positioned on the surface of the light extracting surface in the organic electroluminescence light emitting device, the light extraction efficiency is enhanced. Accordingly, excellent effects such as increase of luminance are exhibited by laminating the film-shaped substrate 2a on the glass substrate 7 without the complicated processing of the glass substrate 7 which is positioned on the side of the light extracting surface rather than the side of the light emitting layer 10 of the organic electroluminescence (organic EL) light emitting device.

Incidentally, examples of a method for bonding the laminated film having a concave/convex structure on its surface to the glass substrate 7 include, for example, a method of bonding the film-shaped substrate 2a of the laminated film to the glass substrate 7 through the pressure-sensitive adhesive layer 6, a method of thermally bonding the film-shaped substrate 2a of the laminated film to the glass substrate 7 by pressing and the like, and the present invention is not limited only to those exemplified ones. Also, in the embodiment as shown in Fig. 7, the pressure-sensitive adhesive layer 6 is used. However, an adhesive layer (not shown) can be used in place of the pressure-sensitive adhesive layer 6.

Examples of the pressure-sensitive adhesive agent used for the pressure-sensitive adhesive layer 6 and the adhesive agent used for an adhesive layer (not shown) include, for example, pressure-sensitive adhesive agents such as a pressure-sensitive adhesive agent containing an acrylic resin, a pressure-sensitive adhesive agent containing a silicone resin and a pressure-sensitive adhesive agent containing a rubber; adhesive agents such as an adhesive agent containing an acrylic resin, an adhesive agent containing a urethane resin and an adhesive agent containing a polyester resin; adhesive agents curable with an active energy ray such as an ultraviolet ray or an electron beam, and the like,

and the present invention is not limited only to those exemplified ones. In the above-mentioned pressure-sensitive adhesive agents and adhesive agents, a pressure-sensitive adhesive agent containing an acrylic resin, a pressure-sensitive adhesive agent containing a urethane resin, an adhesive agent containing an acrylic resin and an adhesive agent containing a urethane resin are preferable from the viewpoint of reduction of the difference in refractive index between the refractive index of the pressure-sensitive adhesive agent layer 6 or the adhesive layer (not shown) and the refractive index of the film-shaped substrate 2a, and the difference in refractive index between the refractive index of the pressure-sensitive adhesive layer 6 or the adhesive layer (not shown) and the refractive index of the glass substrate 7, and increase in extraction efficiency of a light ray.

Incidentally, the above-mentioned pressure-sensitive adhesive agent and adhesive agent can contain an additive. Examples of the additive include, for example, crosslinking agents, adhesion promoters, wettability improvers, sensitizers, ultraviolet absorbers, antiaging agents, dyes, processing aids, ion capture agents, antioxidants, tackifiers, fillers, plasticizers, leveling agents, defoaming agents, antistatic agents and the like, and the present invention is not limited only to those exemplified ones.

EXAMPLES

Next, the present invention will be more specifically explained based on working examples, and the present invention is not limited only to those working examples.

Producing Example 1

A flask equipped with a dropping funnel, a stirrer, a nitrogen gas introducing tube, a thermometer and a reflux condenser tube was charged with 63.0 g of deionized water. Also, in the dropping funnel, a pre-emulsion was prepared from 12.0 g of a 25% aqueous solution of an anionic surfactant [polyoxyethylene alkyl phenyl ether sulfuric acid ester salt, manufactured by Dai-ichi Kogyo Seiyaku Co., Ltd. under the trade name of Aqualon (registered trademark) HS-10] as an emulsifier, 42.8 g of deionized water, 68.0 g of methyl methacrylate, 20.0 g of cyclohexyl methacrylate, 10.0 g of styrene and 2.0 g of acrylic acid. Thereafter, the temperature was raised to 75°C under stirring while nitrogen gas was slowly blown into the flask, 6.0 g of a 5% potassium persulfate aqueous solution was added, to initiate an initial reaction.

After the completion of the initial reaction, the pre-emulsion obtained in the above was uniformly added dropwise to the flask over 5 hours in the state where the inside of the reaction system was maintained at 80°C. After the completion of the addition, the dropping funnel was washed with 5 g of deionized water, and the washing liquid was added dropwise to the flask. Thereafter, the temperature was maintained at 80°C for 1 hour, to terminate the polymerization.

The resulting reaction liquid was cooled to room temperature, to obtain a polymer dispersion having a non-volatile matter content of 44.6% by mass. The calculated glass transition temperature of the resulting polymer was 97°C.

Producing Example 2

A flask equipped with a dropping funnel, a stirrer, a nitrogen gas introducing tube, a thermometer and a reflux condenser tube was charged with 812.6 g of deionized water. Also, in the dropping funnel, a first stage pre-emulsion was prepared from 80.0 g of a 25% aqueous solution of an anionic surfactant [polyoxyethylene alkyl phenyl ether sulfuric acid ester salt, manufactured by Dai-ichi Kogyo Seiyaku Co., Ltd. under the trade name of Aqualon (registered trademark) HS-10] as an emulsifier, 133.3 g of deionized water, 390.0 g of methyl methacrylate, 100.0 g of trimethylolpropane trimethacrylate and 10.0 g of acrylic acid, 140.0 g of the pre-emulsion corresponding to 10% by mass of the total amount of monomers was added to the flask, and the temperature was raised to 75°C under stirring while nitrogen gas was slowly blown. After raising the temperature, 60.0 g of a 5% potassium persulfate aqueous solution was added to the flask, to initiate an initial reaction.

After the completion of the initial reaction, the first stage pre-emulsion obtained in the above was uniformly added dropwise over 2 hours in the state where the inside of the reaction system was maintained at 80°C. After the completion of the addition, the dropping funnel was washed with 20.0 g of deionized water, and the washing liquid was added to the flask. Thereafter, the temperature was maintained at 80°C for 1 hour, to terminate the first stage polymerization.

Next, a second stage pre-emulsion was prepared from 40.0 g of a 25% aqueous solution of an anionic surfactant [polyoxyethylene alkyl phenyl ether sulfuric acid ester salt, manufactured by Dai-ichi Kogyo Seiyaku Co., Ltd. under the trade name of Aqualon (registered trademark) HS-10] as an emulsifier, 146.0 g of deionized water, 100.0 g of styrene, 140.0 g of cyclohexyl methacrylate, 250.0 g of methyl methacrylate and 10.0 g of acrylic acid in the dropping funnel, and was uniformly added dropwise to the flask over 2 hours. After the completion of the addition, the dropping funnel was washed with 20.0 g of deionized water, and the washing liquid was added to the flask. Thereafter, the temperature was maintained at 80°C for 1 hour, a 25% ammonia aqueous solution was added to the flask, and pH was adjusted to

9.0, to terminate the second stage polymerization.

The resulting reaction liquid was cooled to room temperature, to obtain a polymer dispersion having a non-volatile matter content of 44.0% by mass. The calculated glass transition temperature of the resulting polymer was 101°C.

Example 1

A molding material was obtained by mixing 224.2 g of the polymer dispersion obtained in Producing Example 1, 2.5 g of 2,2'-azobis(2-methylbutyronitrile) and 50.0 g of 1,6-hexanediol dimethacrylate with stirring. The minimum film-forming temperature of the resulting molding material was 0°C.

The resulting molding material was applied to a glass plate with a 10 mil applicator, and preliminarily dried at 50°C for 1 hour, to form a thin film on the glass plate. The thickness of the thin film was about 100 μm.

Next, a die on which a concave/convex structure had been previously patterned with a pressing machine (depth of concave portion: about 10 μm) was used. The molding temperature (temperature of die) was controlled to 100°C, and the glass substrate was placed on the surface of the die, on which the concave/convex structure was patterned so that the surface on which the thin film was formed was faced downward. The thin film was maintained at 100°C for 1 hour, and a pattern was transferred to the thin film with the pressing machine. The die was released from this glass substrate, to obtain a molded body having a thin film on the glass substrate, in which a pattern was transferred to the thin film. The difference between the molding temperature and the minimum film-forming temperature was 100°C.

As the physical properties of the resulting molded body, molding accuracy, hardness of the molded body and appearance of the molded body were evaluated based on the following methods, and each score in the evaluation of each physical property was summed up to determine the total score. The results are shown in Table 1.

(1) Molding accuracy

A molded body was observed with a scanning electron microscope (SEM), and evaluated in accordance with the following criteria of evaluation.

[Criteria of evaluation]

5: No poor transcription
4: Rate of poor transcription is less than 20%.
3: Rate of poor transcription is at least 20% and less than 50%.
2: Rate of poor transcription is at least 50% and less than 70%.
1: Rate of poor transcription is at least 70%.

(2) Hardness of molded body

A molded body was formed, and the molded body was allowed to stand at room temperature for 1 day. Thereafter, a pencil scratch test of the molded body was carried out in accordance with JIS K 5400, and the molded body was evaluated in accordance with the following criteria of evaluation.

[Criteria of evaluation]

5: Pencil hardness is at least 5H.
4: Pencil hardness is from 3 to 4H.
3: Pencil hardness is from HB to 2H.
2: Pencil hardness is from 2B to B.
1: Pencil hardness is at most 3B.

(3) Appearance of molded body

A molded body was preliminarily dried, and then the molded body was observed with naked eyes and evaluated in accordance with the following criteria of evaluation.

[Criteria of evaluation]

3: No crack is observed.
2: Cracks are partially observed.
1: Cracks are observed on the whole area.

Example 2

A molding material was obtained by mixing 224.2 g of the polymer dispersion obtained in Producing Example 1, 2.5 g of 2-methyl-1- [4-(methyl-thio)phenyl]-2-morpholinopropane-1-one and 50.0 g of 1,6-hexanediol dimethacrylate with stirring. The minimum film-forming temperature of the resulting molding material was 0°C.

The molding material was applied to a glass plate with a 10 mil applicator and previously dried at 50°C for 1 hour, to form a thin film on the glass plate. The thickness of the thin film was about 100 μm.

Next, a die on which a concave/convex structure had been previously patterned with a pressing machine (depth of concave portion: about 10 μm) was used. The molding temperature (temperature of the die) was controlled to 25°C, and the glass substrate was placed on the surface of the die on which the concave/convex structure had been patterned in the state where the surface on which the thin film had been formed was faced downward. The pattern of the concave/convex structure was transferred to the thin film with the pressing machine. This glass substrate was irradiated with an ultraviolet ray at an intensity of 500 mJ/$cm^2$, and thereafter the die was released from the glass substrate, to obtain a molded body having a thin film with a pattern transferred to the glass substrate. The difference between the molding temperature and the minimum film-forming temperature was 25°C. The physical properties of the resulting molded body were examined in the same manner as in Example 1. The results are shown in Table 1.

Example 3

A molded body was produced in the same manner as in Example 2 except that the molding temperature (temperature of die) was changed from 25°C to 10°C in Example 2. The minimum film-forming temperature of the resulting molding material was 0°C, and the difference between the molding temperature and the minimum film-forming temperature was 10°C.

The molding material obtained in the above was used, and a molded body was produced in the same manner as in Example 2. The physical properties of the molded body were examined in the same manner as in Example 1. The results are shown in Table 1.

Example 4

A molding material was obtained by mixing 224.2 g of the polymer dispersion obtained in Producing Example 1, 2.5 g of 2-methyl-1-[4-(methylthio)phenyl]-2-morpholinopropane-1-one, 50.0 g of 1,6-hexanediol dimethacrylate and 25.0 g of dipentaerythritol hexaacrylate with stirring. The minimum film-forming temperature of the resulting molding material was 0°C.

The molding material obtained in the above was used, and a molded body was produced in the same manner as in Example 2. The physical properties of the molded body were examined in the same manner as in Example 1. The results are shown in Table 1. Incidentally, the difference between the molding temperature and the minimum film-forming temperature was 25°C.

Example 5

A molded body was produced in the same manner as in Example 2 except that the amount of 1,6-hexanediol dimethacrylate was changed from 50.0 g to 25.0 g, and that the molding temperature of the pressing machine (temperature of a die) was changed to 50°C in Example 2. The physical properties of the molded body were examined in the same manner as in Example 1. The results are shown in Table 1. Incidentally, the minimum film-forming temperature of the molding material was 30°C, and the difference between the molding temperature and the minimum film-forming temperature was 20°C.

Example 6

A molding material was obtained by mixing 227.3 g of the polymer dispersion obtained in Producing Example

2, 3.0 g of 1-hydroxycyclohexyl phenyl ketone, 30.0 g of 1,6-hexanediol dimethacrylate and 50.0 g of dipentaerythritol hexaacrylate with stirring. The minimum film-forming temperature of the resulting molding material was 0°C.

The molding material obtained in the above was used, and a molded body was produced in the same manner as in Example 2 except that the molding material was irradiated with an ultraviolet ray at an intensity of 2 $J/cm^2$. The physical properties of the molded body were examined in the same manner as in Example 1. The results are shown in Table 1. Incidentally, the difference between the molding temperature and the minimum film-forming temperature was 25°C.

Comparative Example 1

A molded body was produced in the same manner as in Example 2 except that 50.0 g of 2,2,4-trimethyl-1,3-pentanediol monoisobutyrate [manufactured by Chisso Corporation under the trade name of CS-12] which was a non-reactive compound was added in place of 50.0 g of 1,6-hexanediol dimethacrylate in Example 2. The physical properties of the molded body were examined in the same manner as in Example 1. The results are shown in Table 1. Incidentally, the minimum film-forming temperature of the molding material was 0°C, and the difference between the molding temperature and the minimum film-forming temperature was 25°C.

[Table 1]

| Example No. and Comparative Example No. | Physical properties of molded body | | | |
|---|---|---|---|---|
| | Molding accuracy | Hardness of molded body | Appearance of molded body | Total score |
| Example | | | | |
| 1 | 4 | 4 | 3 | 11 |
| 2 | 5 | 4 | 3 | 12 |
| 3 | 3 | 4 | 3 | 10 |
| 4 | 5 | 5 | 3 | 13 |
| 5 | 4 | 4 | 3 | 11 |
| 6 | 5 | 5 | 3 | 13 |
| Comparative Example 1 | 2 | 1 | 3 | 6 |

From the results shown in Table 1, it can be seen that all of the molded body obtained in each example is comprehensively excellent in all of molding accuracy, hardness of a molded body and appearance of a molded body as compared with the molded body obtained in Comparative Example 1.

Preparation Example 1

A reaction vessel equipped with a stirring device, a thermometer, a condenser and a nitrogen gas introducing tube was charged with 40 parts (parts by mass, hereinafter referred to the same) of methyl methacrylate, 10 parts of methyl 2-(hydroxymethyl)acrylate, 50 parts of toluene and 0.025 parts of a phosphite antioxidant [manufactured by ADEKA Corporation under the trade name of ADK STAB 2112], and the temperature of its content in the reaction vessel was raised to 105°C while nitrogen gas was introduced into the reaction vessel. When reflux was started, solution polymerization was carried out under reflux (about 105 to 110°C) while 0.10 parts of tert-amyl peroxyisononanoate [manufactured by Atofina Yoshitomi, Ltd. under the trade name of Lupasol 570] was added dropwise to the reaction vessel over 2 hours, as well as 0.05 parts of tert-amyl peroxyisononanoate [manufactured by Atofina Yoshitomi, Ltd. under the trade name of Lupasol 570] was added as a polymerization initiator to the reaction vessel, and furthermore aging was carried out for 4 hours.

To the polymer solution obtained in the above was added 0.05 parts of stearyl phosphate [manufactured by Sakai Chemical Industry Co., Ltd. under the trade name of Phoslex A-18], and a cyclization condensation reaction was carried out for 2 hours under reflux (about 90 to 110°C).

Next, the polymer solution obtained in the above was passed through a multitubular heat exchanger heated to 240°C to complete the cyclization condensation reaction. Thereafter, the reaction mixture was introduced into a bent-type screw twin screw extruder (L/D = 52) having 1 rear bent, 4 fore bents (referred to as first, second, third and fourth bents from the upper stream side) and a side feeder between the third bent and the fourth bent at a treatment speed of 20 parts/hour in terms of the resin amount under the conditions of a barrel temperature of 240°C, a rotation rate of 120 rpm and a decompression degree of 13.3 to 400 hPa, and degassing was carried out. At that time, a mixed solution of

an antioxidant and a devitalizing agent which had been previously prepared in a manner as described in the following "Preparation of mixed solution of antioxidant and devitalizing agent" was injected to the portion behind the second bent with a high pressure pump at a charging rate of 0.3 parts/hour. Also, ion exchanged water was injected to the portion behind the first bent and the portion behind the side feeder with a high pressure pump at a charging rate of 0.33 parts/hour, respectively.

Also, an AS resin [manufactured by Asahi Kasei Chemicals Corporation under the trade name of Stylac AS783L] was added to the side feeder at a supply rate of 2.12 parts/hour to obtain a melt-kneaded resin.

Next, pellets made of an acrylic resin were obtained by filtering the melt-kneaded resin obtained in the above with a leaf disk-type polymer filter [manufactured by Nagase & Co., Ltd., filtration accuracy: 5 μm].

[Preparation of mixed solution of antioxidant and devitalizing agent]

A mixed solution of an antioxidant and a devitalizing agent was prepared by dissolving 50 parts of a hindered phenol antioxidant [manufactured by Nagase & Co., Ltd. under the trade name of Irganox 1010], 50 parts of a phenol antioxidant [manufactured by ADEKA Corporation under the trade name: ADK STAB AO-4125] and 40 parts of zinc octylate [manufactured by Nihon Kagaku Sangyo Co., Ltd. under the trade name of Nikka Octhix Zinc 3.6%] in 160 parts of toluene.

The weight average molecular weight and the glass transition temperature of the acrylic resin used in the pellets obtained in the above were determined in accordance with the following methods. As a result, the weight average molecular weight of the acrylic resin was 132000, and the glass transition temperature was 125°C.

[Method of determining weight average molecular weight of acrylic resin]

The weight average molecular weight of the acrylic resin was determined by gel permeation chromatography (GPC) under the following conditions.

- System: manufactured by Tosoh Corporation under the item number of GPC System HLC-8220
- Developing solvent: chloroform [manufactured by Wako Pure Chemical Industries, Ltd., special grade], flow rate: 0.6 mL/min
- Standard sample: TSK standard polystyrene [manufactured by Tosoh Corporation under the trade name of PS-Oligomer Kit]
- Constitution of columns at the side of measurement: guard column [manufactured by Tosoh Corporation under the trade name of TSKguardcolumn SuperHZ-L], separation column [manufactured by Tosoh Corporation under the trade name of TSKgel SuperHZM-M]. These two columns were connected in series.
- Constitution of column at the side of reference: reference column [manufactured by Tosoh Corporation under the trade name of TSKgel SuperH-RC]
- Column temperature: 40°C
- Detector: differential refractometer

[Glass transition temperature]

The glass transition temperature (Tg) of the acrylic resin was determined in accordance with the provision of JIS K7121. More specifically, a differential scanning calorimeter [manufactured by Rigaku Corporation under the item number of DSC-8230] was used, and the acrylic resin in an amount of about 10 mg was heated from room temperature to 200°C at a heating rate of 20°C/min under a nitrogen gas atmosphere. The glass transition temperature of the acrylic resin was calculated from the DSC curve obtained by using a starting point method. As a reference, α-alumina was used.

Next, the pellets obtained in the above were put in a single screw extruder equipped with a leaf disk-type polymer filter [manufactured by Nagase & Co., Ltd., filtration accuracy: 5 μm], and a melt-kneaded product was prepared. The resulting melt-kneaded product was extruded from a T-die at a temperature of 280°C, and discharged onto a cooling roll of 110°C, to obtain an unstretched film. The resulting unstretched film was sequentially biaxially stretched so that stretching ratio in each of longitudinal direction and transverse direction became 2.0 times, to obtain a transparent film-shaped substrate having a thickness of 100 μm. The glass transition temperature of the resulting film-shaped substrate was measured in the same manner as in the above. As a result, the glass transition temperature was 125°C. Also, in accordance with the following methods, total light transmittance, haze, b-value, in-plane phase difference Re and thickness-direction phase difference Rth of the film-shaped substrate were determined. As a result, the total light transmittance was 92.3%, the haze was 0.4%, the b-value was 0.1, the in-plane phase difference Re was 1 nm, and the thickness-direction phase difference Rth was 2 nm.

[Total light transmittance]

The total light transmittance of a film-shaped substrate was measured by using a turbidimeter [manufactured by Nippon Denshoku Industries Co., Ltd. under the item number of NDH-5000] in accordance with JIS K7361-1 (1997).

[Haze]

The haze of a film-shaped substrate was measured by using a turbidimeter [manufactured by Nippon Denshoku Industries Co., Ltd. under the item number of NDH-5000].

[b-value (color difference)]

The actual b-value (color difference) of a film-shaped substrate was determined by using a color difference meter [manufactured by Nippon Denshoku Industries Co., Ltd. under the item number of ZE6000], and the actual b-value was converted to a b-value of a film-shaped substrate having a film thickness of 250 μm by calculation. The converted b-value was employed as the b-value. Incidentally, the b-value means a value of b* in the hue according to JIS Z8729. The b-value was determined by overlaying a film-shaped substrate on a standard white plate, measuring a b-value at ten points, and calculating the average of the b-value.

[In-plane phase difference Re]

The in-plane phase difference Re of a film-shaped substrate was determined at a wavelength of 400 nm, 589 nm or 750 nm by using a phase difference film-optical material testing device [manufactured by Otsuka Electronics Co., Ltd. under the item number of RETS-100].

[Thickness-direction phase difference Rth]

The thickness-direction phase difference Rth of a film-shaped substrate was determined at a wavelength of 400 nm, 589 nm or 750 nm by using a phase difference film-optical material testing device [manufactured by Otsuka Electronics Co., Ltd. under the item number of RETS-100]. Also, the average refractive index of the film-shaped substrate was measured by using an Abbe refractometer. Also, thickness "d" of a film-shaped substrate, phase difference value [Re (40°)] which was measured by tilting a substrate at an angle of 40°, refractive index nx in a slow axis direction and refractive index ny in a phase advanced axis direction in the plane of a film-shaped substrate, and refractive index nz in a thickness direction of the film-shaped substrate were determined. Thickness-direction phase difference value Rth of the film-shaped substrate was determined in accordance with the equation:

$$[\text{Thickness-direction phase difference Rth (nm)}] = [(nx + ny)/2 - nz] \times d.$$

Incidentally, the thickness "d" of a film-shaped substrate was determined by using a Digimatic Micrometer [manufactured by Mitutoyo Corporation].

Preparation Example 2

Pellets an acrylic resin were produced in the same manner as in Preparation Example 1, except that 78 parts of a glutarimide resin (manufactured by Evonik Degussa Japan Co., Ltd. under the trade name of PLEXIMID 8813), 22 parts of an AB resin (manufactured by Asahi Kasei Chemicals Corporation under the trade name of Stylac AS783L), 0.05 parts of an antioxidant [manufactured by ADEKA Corporation under the trade name of ADK STAB AO-60] and 0.05 parts of a phenol antioxidant [manufactured by ADEKA Corporation under the trade name of ADK STAB AO-412S] were kneaded with a twin screw extruder to obtain pellets. The weight average molecular weight and the glass transition temperature of the acrylic resin contained in the pellets obtained in the above were measured in the same manner as in Preparation Example 1. As a result, the weight average molecular weight of the acrylic resin was 128000, and the glass transition temperature was 129°C.

Next, a single screw extruder equipped with a leaf disk-type polymer filter [manufactured by Nagase & Co., Ltd., filtration accuracy: 5 μm] was used. The pellets obtained in the above were melt-extruded from a T-die of the extruder at a temperature of 280°C, and discharged onto a cooling roll of 110°C, to obtain an unstretched film. The unstretched film obtained in the above was sequentially biaxially stretched so that stretching ratio in each of longitudinal

direction and transverse direction became 2.0 times, to obtain a transparent film-shaped substrate having a thickness of 100 μm. Glass transition temperature, total light transmittance, haze, b-value, in-plane phase difference Re and thickness-direction phase difference Rth of this film-shaped substrate were examined in the same manner as in Preparation Example 1. As a result, the glass transition temperature was 129°C, the total light transmittance was 91.8%, the haze was 0.5%, the b-value was 0.3, the in-plane phase difference Re was 2 nm and the thickness-direction phase difference Rth was 2 nm.

Example 7

The molding material obtained in Example 4 was applied to the film-shaped substrate obtained in Preparation Example 1 by using a bar coater so that the thickness after drying became about 4 μm, and dried at a temperature of 60°C for 10 minutes. As a result, a laminated film in which a molding material layer was formed on one surface of the film-shaped substrate was obtained as a molded body.

Next, the laminated film was placed on a glass substrate so that the surface of the laminated film opposite to the surface on which the molding material layer of the laminated film was formed was contacted with the glass substrate, and the laminated film was firmly attached to the glass substrate.

A transparent molding die (length: 20 mm, width: 20 mm) made of quartz, the temperature of which was controlled to 40°C, and which had cone-shaped concave portions of a diameter of 200 nm and a depth of 400 nm being arranged in a pitch of 220 nm, was used. The laminated film was placed on the molding die so that the surface of the molding die on which a concave/convex structure was formed was contacted with the surface of the laminated film on which the molding material layer was formed. The molding die was pushed against the laminated film, and a pressure of 2 kN was applied to the surface of the molding material layer so that the whole area of the substrate was evenly pressurized.

Next, the molding material layer was irradiated with an ultraviolet ray from the side of a molding die by using a high pressure mercury lamp (120 W/cm) so that the integrated light intensity became 500 $mJ/cm^2$, to cure the molding material layer. Thereafter, the glass substrate and film-shaped substrate were released from the molding die, and the film-shaped substrate was released from the glass substrate, to obtain a molded body having a concave/convex structure on its surface.

The molding material layer of the molded body obtained in the above was observed by using an atomic force microscope (AFM). As a result, it was confirmed that a concave/convex structure in which cone-shaped projections having an average height of 400 nm were arranged in an average pitch of 220 nm was formed on the surface of the molding material layer, and that there was no poor transcription on the surface.

As the physical properties of the molded body obtained in the above, hardness of the molding material layer was examined in the same manner as in the above-mentioned "(2) Hardness of molded body", the total light transmittance was examined in the same manner as in Preparation Example 1, and dynamic hardness, steel wool resistance, adhesion property and luminous reflectance were determined in accordance with the following methods. As a result, the dynamic hardness was 11.3 $mN/\mu m^2$, the absolute value of the difference in haze value (ΔHz) which was determined for evaluating steel wool resistance was 5.4, the evaluation of hardness of the molding material layer was "4", the evaluation of adhesion property was "5", the total light transmittance was 94.9%, and the luminous reflectance was 0.15%.

[Dynamic hardness]

An indentation test of a molded body having a concave/convex structure was carried out by using a dynamic ultramicro hardness tester [manufactured by Shimadzu Corporation under the item number of DUH-201] under the conditions of an indenter: a triangular pyramid indenter (made of diamond) having an angle between ridges of 115°, test force: 0.2 mN, loading rate: 0.00474 mN/sec and retention period of time: 10 seconds, and the dynamic hardness in a pushing depth of 100 nm was determined by the equation:

$$[\text{Dynamic hardness } (mN/\mu m^2)] = 3.8584 \times [\text{load in pushing depth } (mN)] / [\text{pushing depth } (\mu m)]^2.$$

[Steel wool resistance]

A test piece was produced by bonding a molded body having a concave/convex structure (the length is 20 mm and the width is 20 mm on the concave/convex structure surface) to a glass plate so that the surface having a concave/convex structure was used as a surface for testing.

Steel wool No. 0000 [manufactured by Nippon Steel Wool Co., Ltd. under the trade name of BON STAR] was uniformly attached to a cylinder having a diameter of 10 mm so that the steel wool was smoothly attached to the vertical cross section of the cylinder, and a test for scratch resistance was carried out by reciprocating the steel wool ten times on the surface having a concave/convex structure under the conditions of a load of 200 g/cm$^2$ and a reciprocating speed of 30 mm/sec.

The haze value of the molded body before and after the scratch resistance test was measured by using a turbidimeter [manufactured by Nippon Denshoku Industries Co., Ltd. under the item number of NDH-5000], and the absolute value of the difference in haze value (ΔHz) was determined in accordance with the equation:

$$\text{[Absolute value of the difference in haze value } (\Delta\text{Hz})] = |(\text{Haze value after test for scratch resistance}) - (\text{Haze value before test for scratch resistance})|.$$

[Adhesion property]

In accordance with JIS K5600-5-6, the molding material layer was cut into squares having an interval of 1 mm, and the adhesion property between the molding material layer and the film-shaped substrate of the molded body having a concave/convex structure was examined. The adhesion property was evaluated in accordance with the following criteria of evaluation.

(Criteria of evaluation)

5: The cut edge is smooth and no peeling existed in any squares.
4: The peeled area was less than 5% of all the area of squares.
3: The peeled area was not less than 5% and less than 15% of all the area of squares.
2: The peeled area was not less than 15% and less than 35% of all the area of squares.
1: The peeled area was not less than 35% and less than 65% of all the area of squares.
0: The peeled area was not less than 65% of all the area of squares.

[Luminous reflectance]

Spectral reflectance of the surface having a concave/convex structure of the molded body was measured by adhering a black tape to the surface opposite to the surface having a concave/convex structure of the molded body at an incidence angle of 5° and a wavelength range of 380 to 780 nm by using a spectrophotometer [manufactured by Shimadzu Corporation under the item number of UV3700]. The luminous reflectance of the molded body having a concave/convex structure was determined in accordance with JIS R 3106 by using the results of the spectral reflectance measured.

Example 8

A molded body having a concave/convex structure on its surface was obtained in the same manner as in Example 7, except that the film-shaped substrate obtained in Preparation Example 2 was used as a film-shaped substrate in Example 7.

The molding material layer of the molded body obtained in the above was observed with an atomic force microscope (AFM). As a result, it was confirmed that a concave/convex structure in which cone-shaped projections having an average height of 400 nm were arranged in an average pitch of 220 nm was formed on the surface of the molding material layer, and that there was no poor transcription.

As the physical properties of the molded body obtained in the above, dynamic hardness, absolute value of the difference in haze value (ΔHz), hardness of the molding material layer, adhesion property, total light transmittance and luminous reflectance were examined in the same manner as in Example 7. As a result, the dynamic hardness was 10.9 mN/μm$^2$, the absolute value of the difference in haze value (ΔHz) was 5.8, the evaluation of hardness of the molding material layer was "5", the evaluation of adhesion property was "4", the total light transmittance was 94.6%, and the luminous reflectance was 0.26%.

Example 9

The same manner as in Example 7 was carried out except that a cycloolefin polymer film [manufactured by Zeon Corporation under the trade name of ZEONOR] was used as a film-shaped substrate in Example 7, to obtain a molded body having a concave/convex structure on its surface.

The molding material layer of the molded body obtained in the above was observed with an atomic force microscope (AFM). As a result, it was confirmed that a concave/convex structure in which cone-shaped projections having an average height of 390 nm were arranged in an average pitch of 220 nm was formed on the surface of the molding material layer, and that there was little poor transcription.

As the physical properties of the molded body obtained in the above, dynamic hardness, absolute value of the difference in haze value (ΔHz), hardness of the molding material layer, adhesion property, total light transmittance and luminous reflectance were examined in the same manner as in Example 7. As a result, the dynamic hardness was 10.9 mN/μm$^2$, the absolute value of the difference in haze value (ΔHz) which was determined for evaluating steel wool resistance was 5.7, the evaluation of hardness of the molding material layer was "4", the evaluation of adhesion property was "3", the total light transmittance was 94.6%, and the luminous reflectance was 0.22%.

Example 10

The same manner as in Example 7 was carried out except that a triacetylcellulose film [manufactured by FUJIFILM Corporation under the item number of TD-80U] was used as a film-shaped substrate in Example 7, to obtain a molded body having a concave/convex structure on its surface.

The molding material layer of the molded body obtained in the above was observed with an atomic force microscope (AFM). As a result, it was confirmed that a concave/convex structure in which cone-shaped projections having an average height of 400 nm were arranged in an average pitch of 220 nm was formed on the surface of the molding material layer, and that there was no poor transcription.

As the physical properties of the molded body obtained in the above, dynamic hardness, absolute value of the difference in haze value (ΔHz), hardness of the molding material layer, adhesion property, total light transmittance and luminous reflectance were examined in the same manner as in Example 7. As a result, the dynamic hardness was 11.5 mN/μm$^2$, the absolute value of the difference in haze value (ΔHz) which was determined for evaluating steel wool resistance was 6.2, the evaluation of hardness of the molding material layer was "4", the evaluation of adhesion property was "4", the total light transmittance was 94.7%, and the luminous reflectance was 0.19%.

Example 11

A molding material was obtained by mixing 224.2 g of the polymer dispersion obtained in Producing Example 1, 3.0 g of 1-hydroxycyclohexyl phenyl ketone, 30.0 g of 1,6-hexanediol dimethacrylate and 50.0 g of dipentaerythritol hexaacrylate with stirring. The minimum film-forming temperature of the resulting molding material was 0°C.

The molding material obtained in the above was applied to the film-shaped substrate obtained in Preparation Example 1 with a bar coater so that the film thickness after drying became about 3 μm, and dried at a temperature of 100°C for 3 minutes to obtain a laminated film on which a molding material layer was formed on one surface of a film-shaped substrate as a molded body.

Next, a molding die (length: 20 mm, width: 20 mm) made of quartz on which cone-shaped concave portions having a depth of 350 nm were arranged in an array of three way in an average pitch of 260 nm was used. The molding die was placed on the surface of the molding material layer of the laminated film so that the surface of the molding die on which a concave/convex pattern had been formed was contacted with the molding material layer, and the molding die was pushed against the surface of the molding material layer. An imprint device [manufactured by Toshiba Machine Co., Ltd. under the item number of ST-02] was used, and a pressure of 2 kN was applied to the surface of the molding material layer for 10 minutes so that the whole surface area of the substrate was evenly pressurized while the laminated film was heated at 80°C. Next, the molding material layer was irradiated with an ultraviolet ray by using a high pressure mercury lamp (lamp output: 120 W/cm) so that the integrated light amount became 100 mJ/cm$^2$ to half cure the molding material layer, and thereafter the laminated film was released from the molding die.

Furthermore, the surface having a concave/convex structure of the laminated film obtained by transferring a concave/convex structure to the molding material layer was irradiated with an ultraviolet ray by using a high pressure mercury lamp (lamp output: 120 W/cm) so that the integrated light amount became 2 J/cm$^2$ to cure the molding material layer completely, to obtain a molded body having a concave/convex structure on its surface.

The molding material layer of the molded body obtained in the above was observed with an atomic force microscope (AFM). As a result, it was confirmed that a concave/convex structure in which cone-shaped projections having an average height of 350 nm were arranged in an array of three way in an average pitch of 260 nm was formed

on the surface of the molding material layer, and that there was no poor transcription.

As the physical properties of the molded body obtained in the above, dynamic hardness, absolute value of the difference in haze value (ΔHz), hardness of the molding material layer, adhesion property, total light transmittance and luminous reflectance were examined in the same manner as in Example 7. As a result, the dynamic hardness was 23.4 mN/$\mu m^2$, the absolute value of the difference in haze value (ΔHz) which was determined for evaluating steel wool resistance was 1.6, the evaluation of hardness of the molding material layer was "5", the evaluation of adhesion property was "5", the total light transmittance was 95.4%, and the luminous reflectance was 0.11%.

Example 12

A molding material was obtained by mixing 224.2 g of the polymer dispersion obtained in Producing Example 1, 3.0 g of 1-hydroxycyclohexyl phenyl ketone, 30.0 g of 1,6-hexanediol dimethacrylate and 50.0 g of dipentaerythritol hexaacrylate with stirring. The minimum film-forming temperature of the resulting molding material was 0°C.

The molding material obtained in the above was applied to the film-shaped substrate obtained in Preparation Example 1 with a bar coater so that the film thickness after drying became about 3 μm, and dried at a temperature of 100°C for 3 minutes to obtain a laminated film on which a molding material layer was formed on one surface of the film-shaped substrate as a molded body.

Next, a molding die (length: 20 mm, width: 20 mm) made of quartz on which cone-shaped concave portions having a depth of 350 nm were arranged in an array of three way in an average pitch of 260 nm was used. The molding die was placed on the surface of the molding material layer of the laminated film so that the surface of the molding die on which a concave/convex pattern had been formed was contacted with the molding material layer, and the molding die was pushed against the surface of the molding material layer. An imprint device [manufactured by Toshiba Machine Co., Ltd. under the item number of ST-02] was used, and a pressure of 2 kN was applied to the surface of the molding material layer for 10 minutes so that the whole surface area of the substrate was evenly pressurized while the laminated film was heated at 80°C. Thereafter, the laminated film was cooled to 30°C, and the laminated film was released from the molding die.

Next, the surface having a concave/convex structure of the laminated film obtained by transferring a concave/convex structure to the molding material layer was irradiated with an ultraviolet ray by using a high pressure mercury lamp (lamp output: 120 W/cm) so that the integrated light amount became 2 J/$cm^2$ to cure the molding material layer completely, to obtain a molded body having a concave/convex structure on its surface.

The molding material layer of the molded body obtained in the above was observed with an atomic force microscope (AFM). As a result, it was confirmed that a concave/convex structure in which cone-shaped projections having an average height of 350 nm were arranged in an array of three way in an average pitch of 260 nm was formed on the surface of the molding material layer, and that there was no poor transcription.

As the physical properties of the molded body obtained in the above, dynamic hardness, absolute value of the difference in haze value (ΔHz), hardness of the molding material layer, adhesion property, total light transmittance and luminous reflectance were examined in the same manner as in Example 7. As a result, the dynamic hardness was 28.5 mN/$\mu m^2$, the absolute value of the difference in haze value (ΔHz) which was determined for evaluating steel wool resistance was 0.3, the evaluation of hardness of the molding material layer was "5", the evaluation of adhesion property was "5", the total light transmittance was 95.6%, and the luminous reflectance was 0.12%.

Example 13

A molded body having a concave/convex structure on its surface was obtained in the same manner as in Example 12, except that a polyethylene terephthalate film [manufactured by Toyobo Co., Ltd. under the trade name of Cosmoshine A4300] was used in place of the film-shaped substrate used in Example 12.

The molding material layer of the molded body obtained in the above was observed with an atomic force microscope (AFM). As a result, it was confirmed that a concave/convex structure in which cone-shaped projections having an average height of 350 nm were arranged in an array of three way in an average pitch of 260 nm was formed on the surface of the molding material layer, and that there was no poor transcription.

As the physical properties of the molded body obtained in the above, dynamic hardness, absolute value of the difference in haze value (ΔHz), hardness of the molding material layer, adhesion property, total light transmittance and luminous reflectance were examined in the same manner as in Example 7. As a result, the dynamic hardness was 30.4 mN/$\mu m^2$, the absolute value of the difference in haze value (ΔHz) which was determined for evaluating steel wool resistance was 0.3, the evaluation of hardness of the molding material layer was "5", the evaluation of adhesion property was "4", the total light transmittance was 93.8%, and the luminous reflectance was 0.26%.

Example 14

A molding material was obtained by mixing 224.2 g of the polymer dispersion obtained in Producing Example 1, 2.5 g of 2-methyl-1-[4-(methylthio)phenyl]-2-morpholinopropane-1-one, 60.0 g of 1,6-hexanediol dimethacrylate and 10.0 g of dipentaerythritol hexaacrylate with stirring. The minimum film-forming temperature of the resulting molding material was 0°C.

The molding material obtained in the above was applied to the film-shaped substrate obtained in Preparation Example 1 with a bar coater so that the film thickness after drying became about 3 μm, and dried at a temperature of 100°C for 3 minutes to obtain a laminated film on which a molding material layer was formed on one surface of the film-shaped substrate as a molded body.

Next, a molding die (length: 20 mm, width: 20 mm) made of quartz on which cone-shaped concave portions having a depth of 350 nm were arranged in an array of three way in an average pitch of 260 nm was used. The molding die was placed on the surface of the molding material layer of the laminated film so that the surface of the molding die on which a concave/convex pattern had been formed was contacted with the molding material layer, and the molding die was pushed against the surface of the molding material layer. An imprint device [manufactured by Toshiba Machine Co., Ltd. under the item number of ST-02] was used, and a pressure of 2 kN was applied to the surface of the molding material layer for 10 minutes so that the whole surface area of the substrate was evenly pressurized while the laminated film was heated at 80°C. Thereafter, the laminated film was cooled to 30°C, and the laminated film was released from the molding die.

Next, the surface having a concave/convex structure of the laminated film obtained by transferring a concave/convex structure to the molding material layer was irradiated with an ultraviolet ray by using a high pressure mercury lamp (lamp output: 120 W/cm) so that the integrated light amount became 1 $J/cm^2$ to cure the molding material layer completely, to obtain a molded body having a concave/convex structure on its surface.

The molding material layer of the molded body obtained in the above was observed with an atomic force microscope (AFM). As a result, it was confirmed that a concave/convex structure in which cone-shaped projections having an average height of 350 nm were arranged in an array of three way in an average pitch of 260 nm was formed on the surface of the molding material layer, and that there was no poor transcription.

As the physical properties of the molded body obtained in the above, dynamic hardness, absolute value of the difference in haze value (ΔHz), hardness of the molding material layer, adhesion property, total light transmittance and luminous reflectance were examined in the same manner as in Example 7. As a result, the dynamic hardness was 6.7 $mN/\mu m^2$, the absolute value of the difference in haze value (ΔHz) which was determined for evaluating steel wool resistance was 7.2, the evaluation of hardness of the molding material layer was "4", the evaluation of adhesion property was "5", the total light transmittance was 95.2%, and the luminous reflectance was 0.14%.

Example 15

A molded body having a concave/convex structure on its surface was obtained in the same manner as in Example 12, except that 227.3 g of the polymer dispersion obtained in Producing Example 2 was used in place of 224.2 g of the polymer dispersion obtained in Producing Example 1 used in Example 12. In this case, the minimum film-forming temperature of the resulting molding material was 0°C.

Next, the molding material obtained in the above was applied to the film-shaped substrate obtained in Preparation Example 1 with a bar coater so that the film thickness after drying became about 3 μm, and dried at a temperature of 100°C for 3 minutes to obtain a laminated film on which a molding material layer was formed on one surface of the film-shaped substrate as a molded body.

Next, a molding die (length: 20 mm, width: 20 mm) made of quartz on which cone-shaped concave portions having a depth of 350 nm were arranged in an array of three way in an average pitch of 260 nm was used. The molding die was placed on the surface of the molding material layer of the laminated film so that the surface of the molding die on which a concave/convex pattern had been formed was contacted with the molding material layer, and the molding die was pushed against the surface of the molding material layer. An imprint device [manufactured by Toshiba Machine Co., Ltd. under the item number of ST-02] was used, and a pressure of 2 kN was applied to the surface of the molding material layer for 10 minutes so that the whole surface area of the substrate was evenly pressurized while the laminated film was heated at 80°C. Thereafter, the laminated film was cooled to 30°C, and the laminated film was released from the molding die.

Next, the surface having a concave/convex structure of the laminated film obtained by transferring a concave/convex structure to the molding material layer was irradiated with an ultraviolet ray by using a high pressure mercury lamp (lamp output: 120 W/cm) so that the integrated light amount became 2 $J/cm^2$ to cure the molding material layer completely, to obtain a molded body having a concave/convex structure on its surface.

The molding material layer of the molded body obtained in the above was observed with an atomic force

microscope (AFM). As a result, it was confirmed that a concave/convex structure in which cone-shaped projections having an average height of 350 nm were arranged in an array of three way in an average pitch of 260 nm was formed on the surface of the molding material layer, and that there was no poor transcription.

As the physical properties of the molded body obtained in the above, dynamic hardness, absolute value of the difference in haze value (ΔHz), hardness of the molding material layer, adhesion property, total light transmittance and luminous reflectance were examined in the same manner as in Example 7. As a result, the dynamic hardness was 34.1 mN/μm$^2$, the absolute value of the difference in haze value (ΔHz) which was determined for evaluating steel wool resistance was 0.2, the evaluation of hardness of the molding material layer was "5", the evaluation of adhesion property was "5", the total light transmittance was 95.4%, and the luminous reflectance was 0.11%.

Comparative Example 2

A molding material was obtained by mixing 224.2 g of the polymer dispersion obtained in Producing Example 1, 2.5 g of 2-methyl-1-[4-(methylthio)phenyl]-2-morpholinopropane-1-one and 50.0 g of 2,2,4-trimethyl-1,3-pentanediol monoisobutyrate [manufactured by Chisso Corporation under the trade name of CS-12] being a non-reactive compound with stirring. The minimum film-forming temperature of the molding material obtained was 30°C.

The molding material obtained in the above was applied to the film-shaped substrate obtained in Preparation Example 1 with a bar coater so that the film thickness after drying became about 3 μm, and dried at a temperature of 100°C for 3 minutes to obtain a laminated film on which a molding material layer was formed on one surface of the film-shaped substrate as a molded body.

Next, a molding die (length: 20 mm, width: 20 mm) made of quartz on which cone-shaped concave portions having a depth of 350 nm were arranged in an array of three way in an average pitch of 260 nm was used. The molding die was placed on the surface of the molding material layer of the laminated film so that the surface of the molding die on which a concave/convex pattern had been formed was contacted with the molding material layer, and the molding die was pushed against the surface of the molding material layer. An imprint device [manufactured by Toshiba Machine Co., Ltd. under the item number of ST-02] was used, and a pressure of 2 kN was applied to the surface of the molding material layer for 10 minutes so that the whole surface area of the substrate was evenly pressurized while the laminated film was heated at 80°C. Thereafter, the laminated film was cooled to 30°C, and the laminated film was released from the molding die.

Next, the surface having a concave/convex structure of the laminated film obtained by transferring a concave/convex structure to the molding material layer was irradiated with an ultraviolet ray by using a high pressure mercury lamp (lamp output: 120 W/cm) so that the integrated light amount became 1 J/cm$^2$ to cure the molding material layer completely, to obtain a molded body having a concave/convex structure on its surface.

The molding material layer of the molded body obtained in the above was observed with an atomic force microscope (AFM). As a result, it was confirmed that a concave/convex structure in which cone-shaped projections having an average height of 340 nm were arranged in an array of three way in an average pitch of 260 nm was formed on the surface of the molding material layer, and that there was slight poor transcription.

As the physical properties of the molded body obtained in the above, dynamic hardness, absolute value of the difference in haze value (ΔHz), hardness of the molding material layer, adhesion property, total light transmittance and luminous reflectance were examined in the same manner as in Example 7. As a result, the dynamic hardness was 4.2 mN/μm$^2$, the absolute value of the difference in haze value (ΔHz) which was determined for evaluating steel wool resistance was 16.4, the evaluation of hardness of the molding material layer was "1", the evaluation of adhesion property was "3", the total light transmittance was 94.6%, and the luminous reflectance was 0.18%.

Example 16

The molded body having a concave/convex structure on its surface obtained in Example 12 was adhered to the light emitting layer glass substrate of an organic electroluminescence (EL) light emitting device [manufactured by Mitsubishi Kagaku Media Co., Ltd. under the trade name of VELVE, adjusted to white color having a luminance of 150 cd/m$^2$] through a pressure-sensitive adhesive layer made of an acrylic resin, to obtain an organic electroluminescence light emitting device.

Next, the front luminance in the organic electroluminescence light emitting device obtained in the above was determined in accordance with the following method. As a result, the above-mentioned luminance was 192 cd/m$^2$.

[Luminance]

A molded body having a concave/convex structure on the surface of the organic electroluminescence light emitting device was masked with a black sheet from which a 20 mm square area was left for the concave/convex

structure-formed portion, and thereafter the front luminance was measured at a measurement angle of 1° by using a spot type single-lens reflex digital luminance meter (manufactured by Konica Minolta, Inc. under the item number of LS-100).

Example 17

The molded body having a concave/convex structure on its surface obtained in Example 8 was adhered to a light emitting layer glass substrate of an organic electroluminescence (EL) light emitting device [manufactured by Mitsubishi Kagaku Media Co., Ltd. under the trade name of VELVE, adjusted to white color having a luminance of 150 cd/$m^2$] through a pressure-sensitive adhesive layer made of an acrylic resin, to produce an organic electroluminescence light emitting device.
Next, the front luminance in the organic electroluminescence light emitting device obtained in the above was determined in the same manner as in Example 16. As a result, the above-mentioned luminance value was 186 cd/$m^2$.

Comparative Example 3

The film-shaped substrate obtained in Preparation Example 1 was adhered to the light emitting layer glass substrate of an organic electroluminescence (EL) light emitting device [manufactured by Mitsubishi Kagaku Media Co., Ltd. under the trade name of VELVE, adjusted to white color having a luminance of 150 cd/$m^2$] through a pressure-sensitive adhesive layer made of an acrylic resin to produce an organic electroluminescence light emitting device.
Next, the front luminance in the organic electroluminescence light emitting device obtained in the above was determined in the same manner as in Example 16. As a result, the above-mentioned luminance value was 154 cd/$m^2$.

REFERENCE SIGNS LIST

1: Molding material layer
2: Substrate
2a: Film-shaped substrate
3: Molding die
4: Polarizer
5: Phase difference film
6: Pressure-sensitive adhesive layer
7: Glass substrate
8: Anode electrode
9: Hole transport layer/hole injection layer
10: Light emitting layer
11: Electron transport layer/electron injection layer
12: Cathode electrode
13: Transparent protective layer

## Claims

**1.** A molding material which is used as a starting material in producing a molded body, comprising a (meth)acrylic resin emulsion, a polyfunctional (meth)acrylic acid ester and a polymerization initiator.

**2.** A resin film formed from the molding material according to claim 1.

**3.** A molded body formed from the molding material according to claim 1, wherein the molding material is cured.

**4.** A molded body comprising a substrate and a molding material layer formed on the substrate, wherein the molding material layer is formed from the molding material according to claim 1.

**5.** The molded body according to claim 4, wherein the molding material layer is cured.

**6.** The molded body according to claim 4 or 5, wherein the substrate is a film-shaped substrate.

**7.** A method for producing a molded body, comprising forming a resin film from a molding material containing a (meth)acrylic resin emulsion, a polyfunctional (meth)acrylic acid ester and a polymerization initiator, and molding the formed resin film with a molding die.

**8.** A molded body comprising a film-shaped substrate and a molding material layer having a concave/convex structure formed on at least one surface of the film-shaped substrate, wherein the dynamic hardness in a pushing depth of 100 nm from the surface having the concave/convex structure is 5 to 50 mN/$\mu m^2$.

**9.** The molded body according to claim 8, wherein the molding material layer having the concave/convex structure is formed from the molding material according to claim 1.

**10.** The molded body according to claim 8 or 9, wherein the average pitch in a horizontal direction of the concave/convex structure in the molding material layer having the concave/convex structure is not more than the wavelength of a visible ray.

**11.** The molded body according to any one of claims 8 to 10, wherein the film-shaped substrate comprises a polymer having a ring structure in its main chain.

**12.** The molded body according to any one of claims 8 to 11, wherein the use of the molded body is a polarizer-protective film.

**13.** The molded body according to any one of claims 8 to 11, wherein the use of the molded body is an organic electroluminescence light emitting device.

**14.** A method for producing the molded body according to any one of claims 8 to 11, comprising forming a molding material layer made of a molding material, forming a concave/convex structure on the formed molding material layer, and curing the molding material layer on which the concave/convex structure is formed.

[FIG.1]

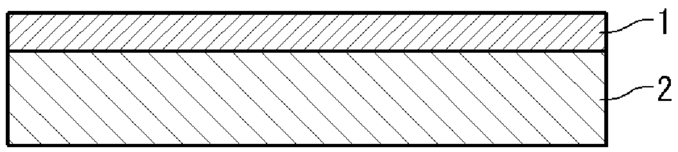

[FIG.2]

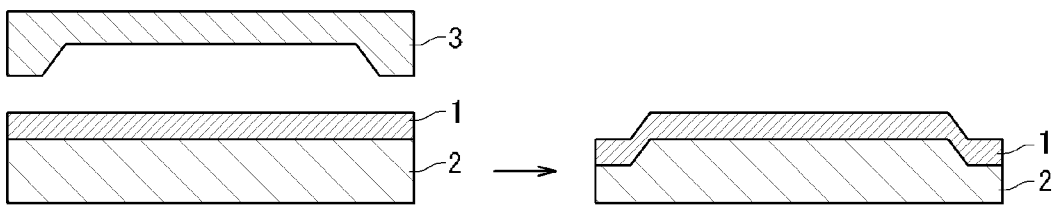

[FIG.3]

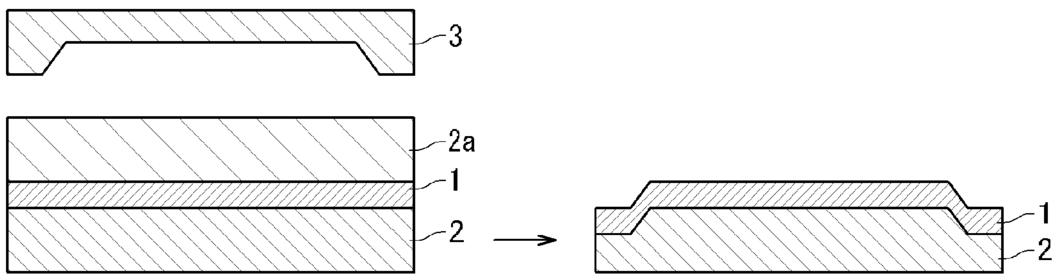

[FIG.4]

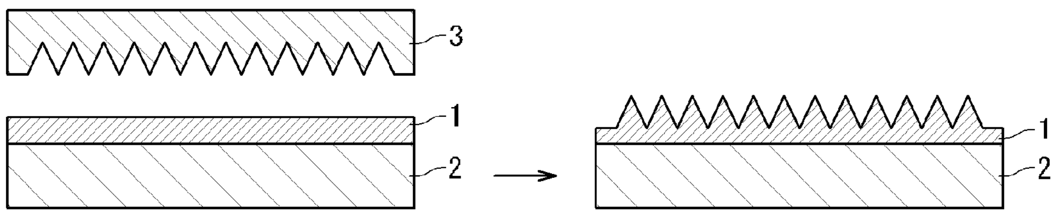

[FIG.5]

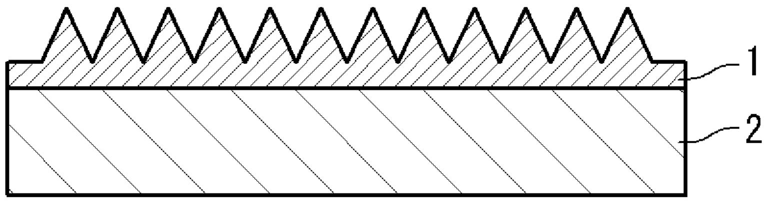

[FIG.6]

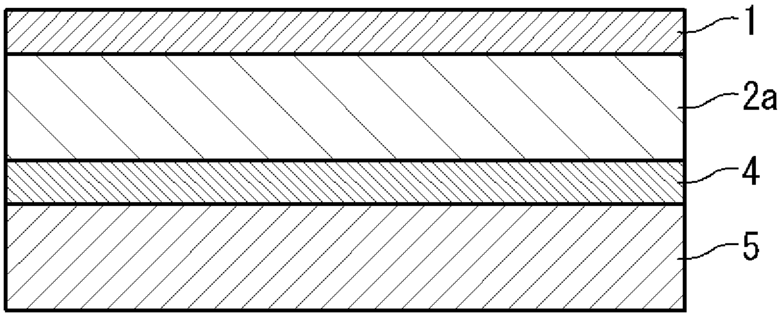

[FIG.7]

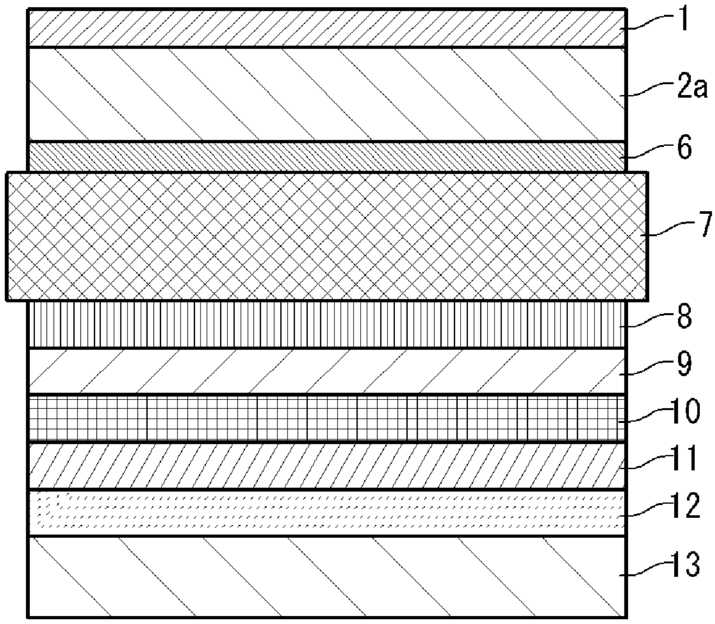

## INTERNATIONAL SEARCH REPORT

International application No.
PCT/JP2012/066937

A. CLASSIFICATION OF SUBJECT MATTER
*C08L51/06*(2006.01)i, *B32B27/30*(2006.01)i, *C08F2/44*(2006.01)i, *C08F265/06*(2006.01)i, *C08J5/00*(2006.01)i, *G02B5/30*(2006.01)i, *H01L51/50*(2006.01)i, *H05B33/02*(2006.01)i

According to International Patent Classification (IPC) or to both national classification and IPC

B. FIELDS SEARCHED

Minimum documentation searched (classification system followed by classification symbols)
C08L51/06, B32B27/30, C08F2/44, C08F265/06, C08J5/00, G02B5/30, H01L51/50, H05B33/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2010-077243 A (JSR Corp.), 08 April 2010 (08.04.2010), claims 1, 5, 6, 14 to 18; paragraphs [0106], [0112], [0113], [0127] to [0147] (Family: none) | 1-9,11-14<br>10 |
| X<br>A | JP 52-138538 A (Mitsui Toatsu Chemicals, Inc.), 18 November 1977 (18.11.1977), claim 1; page 2, lower right column, lines 8 to 14; page 5, lower left column, line 1 to page 6, lower left column, table 2 (Family: none) | 1-9,11,14<br>10,12,13 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 September, 2012 (11.09.12) | 18 September, 2012 (18.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/066937

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2008-209540 A (Mitsubishi Rayon Co., Ltd.), 11 September 2008 (11.09.2008), claim 1; paragraphs [0015], [0035], [0041], [0049]<br>(Family: none) | 8<br>1-7,9-14 |
| A | WO 00/075235 A1 (Goo Chemical Co., Ltd.), 14 December 2000 (14.12.2000), claim 1; page 16, lines 9 to 18; page 21, lines 6 to 15; page 24, line 25 to page 47, line 24<br>& JP 4783531 B & US 6808865 B1<br>& EP 1213327 A1 & CN 1353743 A | 1-7 |

Form PCT/ISA/210 (continuation of second sheet) (July 2009)

**INTERNATIONAL SEARCH REPORT**

International application No.
PCT/JP2012/066937

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The invention of claim 1 is not novel as disclosed in the documents indicated in Box C (for example, JP 2010-077243 A, JP 52-138538 A).

Therefore, the invention of claim 1 does not have a "special technical feature" within the meaning of PCT Rule 13.2, second sentence.

Consequently, the inventions of claims 1-14 have no technical relationship involving one or more of the same or corresponding special technical features, and therefore cannot be considered to be so linked as to form a single general inventive concept.

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011093994 A
- JP 2008209540 A
- JP 2000230016 A
- JP 2001151814 A
- JP 2002120326 A
- JP 2002254544 A
- JP 2005146084 A
- JP 2006309033 A
- JP 2006317560 A
- JP 2006328329 A
- JP 2006328334 A
- JP 2006337491 A
- JP 2006337492 A
- JP 2006337493 A
- JP 2006337569 A
- JP 2007009182 A
- JP 2006283013 A
- JP 2006335902 A
- JP 2006274118 A


### Non-patent literature cited in the description


- *OPTICAACTA,* 1982, vol. 29 (7), 993-1009